(19) Europäisches Patentamt
European Patent Office
Office européen des brevets

(11) EP 1 420 578 A2

(12) **EUROPEAN PATENT APPLICATION**

(43) Date of publication:
**19.05.2004 Bulletin 2004/21**

(51) Int Cl.[7]: **H04N 1/60**

(21) Application number: **03257106.9**

(22) Date of filing: **11.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.11.2002 JP 2002329446**
**20.01.2003 JP 2003010717**

(71) Applicant: **MATSUSHITA ELECTRIC INDUSTRIAL CO., LTD.**
**Kadoma-shi, Osaka 571-8501 (JP)**

(72) Inventors:
- **Kuwahara, Yasuhiro**
**Osaka 535-0002 (JP)**
- **Kojima, Akio**
**Neyagawa-shi Osaka 572-0039 (JP)**
- **Watanabe, Tatsumi**
**Moriguchi-shi Osaka 570-0053 (JP)**
- **Kurosawa, Toshiharu**
**Osaka 538-0041 (JP)**
- **Monobe, Yusuke**
**Kadoma-shi Osaka 571-0014 (JP)**

(74) Representative:
**Dempster, Benjamin John Naftel et al**
**Withers & Rogers,**
**Goldings House,**
**2 Hays Lane**
**London SE1 2HW (GB)**

(54) **Image processing method, image processing apparatus and image processing program**

(57) A image processing that adjusts an input color image in natural color and performs the color adjustment at high speed according to the desires of the operator and within an arbitrary adjustment range, and comprises the steps of: setting a target chromaticity value surface inside a three-dimensional space expressed by one lightness value and two chromaticity values, selecting a target chromaticity value curve on the surface; displaying the curve; using the curve to find target chromaticity values according to the input lightness value of an input color image signal; generating a color adjustment coefficient from the target chromaticity value; and using the coefficient to bring the input chromaticity values close to the target chromaticity values.

FIG. 1

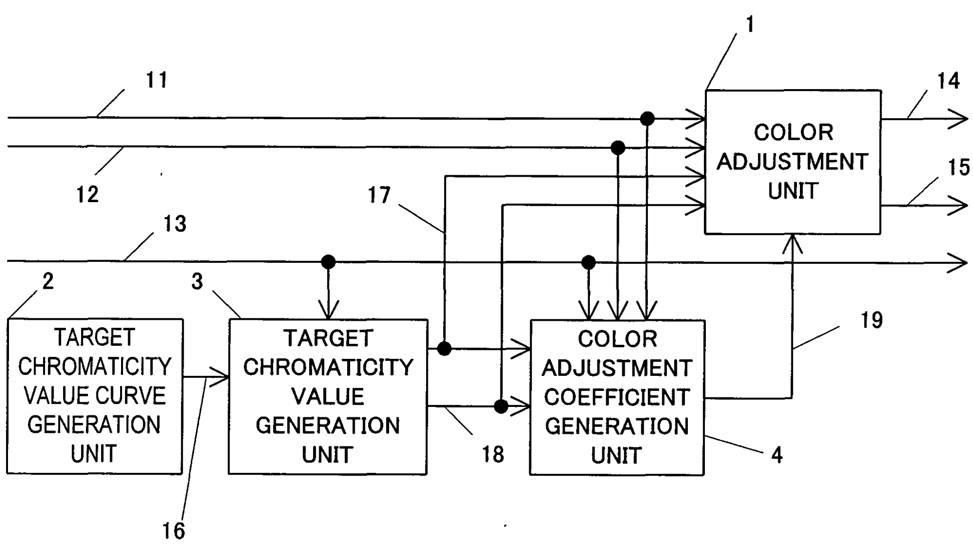


EP 1 420 578 A2

## Description

This invention relates to an image processing method, image processing apparatus and image processing program of a machine or system that handles color images such as a color printer, color copier, color television, digital still camera, or the like, that adjusts colors of a color image to a desired color.

In recent years, as the use of digital still cameras, ink jet printers and the like spreads, situations of individuals handling color images themselves are increasing. When doing this, images taken by a digital still camera are affected by lighting conditions and device characteristics, and the images end up being a different color than the operator intended. In this case, by adjusting the color of the color image, it is possible to change the color to a desired color, however, how to adjust the adjustment parameters (brightness, saturation, etc.) of the image in order to obtain the desired color is not generally well known. For example, in the case where the skin color of an image taken by a digital still camera is not good, how to adjust the hue, tone, saturation, brightness (density), and RGB proportion is not well known by the general operator. Also, even though the skin color is adjusted well, the surrounding color may be changes due to it.

Fig. 42 is a first explanatory drawing explaining a prior image processing method. This method is capable of automatically correcting a specific color to be corrected, such as skin color, and absolutely does not affect any of the other colors. Therefore, it is possible for the operator to convert the color to a desired color without having to operate the unfamiliar adjustment parameters. In Fig. 42, Q corresponds to the desired chromaticity values, P corresponds to the input chromaticity values, and L1 and L2 are preset threshold values. The distance from the desired chromaticity values Q to the input chromaticity values P is L (refer to Japanese unexamined patent publication No. 05-276527).

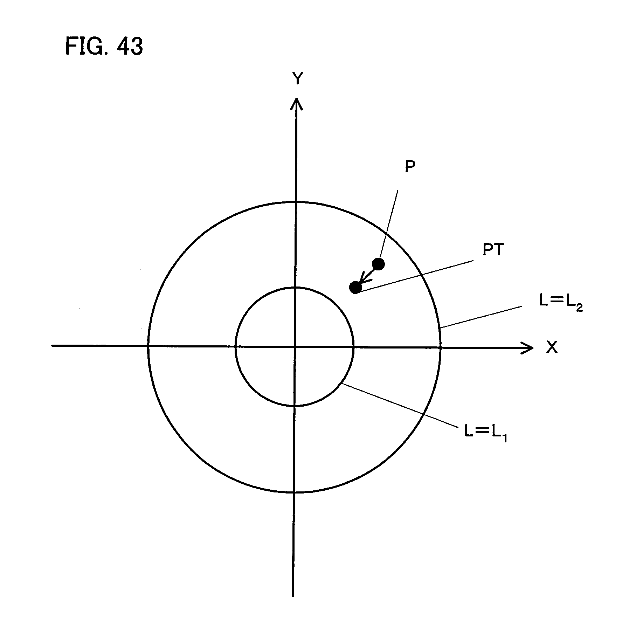

Fig. 43 is a second explanatory drawing explaining a prior image processing method, and in order to simplify the explanation, the desired chromaticity values Q of the first explanatory drawing is placed at the origin. When the distance L is no more than the threshold value L1, the input chromaticity values P is replaced with the desired chromaticity values Q (origin). Moreover, when the distance L is not less than the threshold value L2, the input chromaticity values P is left as is. When the distance L is L1 < L < L2, the input chromaticity values P approaches the desired chromaticity values Q (origin) according to the distance L (PT).

However, in the disclosed method, all of the chromaticity values that are no more than the threshold value L1 are replaced with the desired chromaticity values Q, and it is easy for the color of the output image to become uniform and unnatural. Also, natural color does not have a constant chromaticity value, but rather changes due to the lightness. For example, in the case of natural green, near the light it is close to being yellow, and in dark areas tend to be blue. To put it another way, it is easy for the lightness of yellow leaves to become high and for the lightness of green leaves to be low. Moreover, even in a uniform color space, rarely is the range of color to be changed expressed as a circle, so by making the color the desired chromaticity values Q by simply just comparing the distance, the output image may become unnatural.

This invention adopts the following method for solving the aforementioned problems.

First, the image processing method of this invention sets a target chromaticity value line in a three-dimensional color space that is expressed by one lightness value and two chromaticity values, and then finds the target chromaticity values by using the input lightness value of the input color image signal and the target chromaticity value line, and brings the input chromaticity values of the color image signal close to the target chromaticity values.

By doing this it is possible change the target chromaticity values by the input lightness value, so the color does not easily become uniform and it is possible to obtain a natural image.

In this method, by displaying the color on the target chromaticity value line before finding the target chromaticity values, the operator can check that color, and decide whether or not to adjust the color before processing. Therefore, there is no need to perform unneeded printout. Furthermore, in this case, it is also possible to display target color image data generated by using a plurality of lightness values and a plurality of corresponding chromaticity values that are respectively found from each lightness value and target chromaticity value line.

Moreover, by selecting the target chromaticity value line in the target chromaticity value surface set in the color space, the operator can obtain the desired image.

Instead of a target chromaticity value line, it is possible to use a collection of target chromaticity values, and instead of a target chromaticity value surface, it is possible to use a collection of target chromaticity value lines.

Also, when bringing the input chromaticity values close to the target chromaticity values, it is possible to generate an adjustment chromaticity area by combining a plurality of triangular areas, which have one vertex at a point corresponding to the target chromaticity values on a chromaticity plane, then find a plurality of internal ratios for the input chromaticity values from chromaticity values at intersections of a line connecting the target chromaticity values and the input chromaticity values and lines respectively connecting, of vertexes of each triangular area, vertexes on a periphery of the adjustment chromaticity area and from the target chromaticity values, then select one from the plurality of internal ratios, and then bring the input chromaticity values close to the target chromaticity value using the selected internal ratio. In this way, it is possible to set an adjustment chromaticity area for shapes that cannot be set using a circle or simple shape, and high speed color adjustment calculation becomes possible. When doing this, calculation becomes easy when the adjustment chromaticity area is a convex area, and continuity of the color becomes good. It is also possible to have the adjustment chromaticity area change according to the lightness value.

When selecting one internal ratio from among a plurality of internal ratios, it is possible to find the smallest internal ratio of the plurality of internal ratios, then compare that smallest internal ratio with a first threshold value and select the value which is larger, or it is possible to find the smallest internal ratio from the plurality of internal ratios, and when the smallest internal ratio is less than the first threshold value, select the first threshold value, and when the smallest internal ratio is greater than a second threshold value, select the second threshold value, and when the smallest internal ration is not less than the first threshold value but no more than the second threshold value, select the smallest internal ratio.

It is also possible to have a plurality of target chromaticity value lines depending on specific image color data.

Also, the adjusted chromaticity values obtained when the input chromaticity values of the color image signal are brought close to the target chromaticity values can be generated by using the adjustment chromaticity area where color adjustment is performed, the target chromaticity values, the input chromaticity values of the color image signal, and at least one of a first gain that becomes smaller the further away from a specified lightness value rang and a second gain that becomes smaller the closer the color image signal is to the achromatic color.

In this way, the target chromaticity values are changed by the lightness value, and the color of the output image is prevented from becoming uniform and unnatural. Also, a first gain is generated from the input lightness value, which suppresses color adjustment of unnecessary lightness values, so it is possible to prevent deterioration of the image quality due to color adjustment, making it possible to obtain high image quality.

Also, by correcting the color adjustment coefficient with a second gain, it is possible to suppress unintended changes of color in the portions near the achromatic color due to color adjustment, and thus it is possible to obtain high image quality.

Furthermore, by controlling the both the second gain as well as the first gain, it is possible to perform even more precise gain adjustment. For example, since the color adjustment coefficient is corrected by the second gain, the amount of correction by the first gain is less than when using just the first gain.

Moreover, from another aspect, this invention can also provide an apparatus as described below.

This image processing apparatus comprises: a target chromaticity value generation unit that sets a target chromaticity value line in a three-dimensional color space that is expressed by one lightness value and two chromaticity values using the input lightness value of the input color image signal and finds target chromaticity values using the input lightness value of the input color image signal; a color adjustment coefficient generation unit that generates a color adjustment coefficient for performing color adjustment from the target chromaticity values output from the target chromaticity value generation unit; and a color adjustment unit that brings the input chromaticity value of the color image signal close to the target chromaticity value using the color adjustment coefficient.

From another point of view, this invention can provide a program that executes the aforementioned image processing method on a computer.

In this invention, the target chromaticity values is changed according to the lightness value, which prevent the color of the output image from being uniform and unnatural. The image becomes even more natural than in the case of fixed target chromaticity values, and it is possible to correct the color and make the color of the output image even more natural.

These and other objects, features, aspects and advantages of the present invention will become more apparent from the following detailed description of the present invention when taken in conjunction with the accompanying drawings.

Fig. 1 is a block diagram showing the image processing apparatus of the first embodiment of the invention;
Fig. 2 is a drawing explaining the target chromaticity value curve.
Fig. 3 is a drawing explaining the target chromaticity value curve projected onto a two-dimensional plane;
Fig. 4 is a drawing explaining the adjustment chromaticity area that combines triangular shaped areas;
Fig. 5 is a drawing explaining the point of intersection between the line that connects the input chromaticity values and target chromaticity values and the lines that connect the vertex points of the color adjustment area;
Fig. 6 is a drawing explaining the triangular shaped area;
Fig. 7 is a block diagram showing the first color adjustment coefficient generation circuit, which is one example of the color adjustment coefficient generation unit;
Fig. 8 is a block diagram showing an internal ratio calculation coefficient generation circuit, which is one example of the internal ratio coefficient generation unit;
Fig. 9 is a block diagram showing an internal ratio calculation circuit, which is one example of the internal ratio calculation unit;
Fig. 10 is a block diagram showing the first internal ratio selection circuit, which is one example of the internal ratio calculation unit;
Fig. 11 is a block diagram showing the second internal ratio selection circuit, which is another example of the internal ratio calculation unit;
Fig. 12 is a block diagram showing the second color adjustment coefficient generation circuit, which is another example of the color adjustment coefficient generation unit;
Fig. 13 is a block diagram showing a color adjustment circuit, which is one example of the color adjustment unit;
Fig. 14 is a block diagram showing the image processing apparatus of the second embodiment of the invention;
Fig. 15 is a drawing explaining the target value display apparatus, which is one example of the target value display unit;
Fig. 16 is a block diagram showing the image processing apparatus of the third embodiment of the invention;
Fig. 17 is a drawing explaining the target chromaticity value curve surface;
Fig. 18 is a drawing explaining the two target chromaticity value curves that are projected onto a two-dimensional plane;
Fig. 19 is a drawing explaining the method of selecting a target chromaticity value curve that is projected onto a two-dimensional plane;
Fig. 20 is a drawing explaining target chromaticity value curve selection apparatus, which is one example of the target chromaticity value curve selection unit;
Fig. 21 is a block diagram showing the image processing apparatus of the fourth embodiment of the invention;
Fig. 22 is a block diagram showing a CPU system that makes possible the image processing technique of this invention using software;
Fig. 23 is a flowchart showing the image processing program of the fifth embodiment of the invention;
Fig. 24 is a flowchart showing the steps of generating the color adjustment coefficient;
Fig. 25 is a flowchart showing the image processing program of the sixth embodiment of the invention;
Fig. 26 is a flowchart showing the image processing program of the seventh embodiment of the invention;
Fig. 27 is a flowchart showing the image processing program of the eighth embodiment of the invention;
Fig. 28 is a drawing explaining the first gain;
Fig. 29 is a block diagram of the image processing apparatus of the ninth embodiment of the invention;
Fig. 30 is a block diagram of a first gain generation circuit, which is an example of the first gain generation unit, and a first color adjustment coefficient correction circuit, which is an example of the first color adjustment coefficient correction unit;
Fig. 31 is a block diagram of a color adjustment circuit, which is an example of the color adjustment unit;
Fig. 32 is a block diagram of the image processing apparatus of the tenth embodiment of the invention;
Fig. 33 is a drawing explaining the second gain;
Fig. 34 is a drawing explaining changes in the second gain;
Fig. 35 is a block diagram of a second gain generation circuit, which is an example of the second gain generation unit, and a second color adjustment coefficient correction circuit, which is an example of the second color adjustment coefficient correction unit;
Fig. 36 is a block diagram of the image processing apparatus of the eleventh embodiment of the invention;
Fig. 37 is a block diagram of another second gain generation circuit, which is an example of the second gain generation unit;
Fig. 38 is a block diagram of a third color adjustment coefficient correction circuit, which is an example of a third color adjustment coefficient correction unit;
Fig. 39 is a flowchart of an image processing program of the twelfth embodiment of the invention;
Fig. 40 is a flowchart of an image processing program of the thirteenth embodiment of the invention;
Fig. 41 is a flowchart of an image processing program of the fourteenth embodiment of the invention;
Fig. 42 is the first explanatory drawing of a prior image processing method; and
Fig. 43 is the second explanatory drawing of a prior image processing method.

The preferred embodiments of the invention will be explained below with reference to the drawings.

(First Embodiment)

Fig. 1 is a block diagram of the image processing apparatus of the first embodiment of the invention. Before explaining this block diagram, Fig. 2 to Fig. 6 will be used to explain the image processing method of this embodiment.
Fig. 2 is a drawing explaining the target chromaticity value curve. The input color image signal can be mapped in a three-dimensional color space. In Fig. 2, the three-dimensional color space is expressed by the axis 21 of the lightness L, axis 22 of the chromaticity component CR and axis 23 of the chromaticity component CB. The brightness Y of the NTSC signal can be used instead of the lightness L, the color difference R-Y can be used instead of the chromaticity CR, and the color difference B-Y can be used instead of the chromaticity CB, and it is also possible to use the elements of a uniform color space. In the case where an RGB signal is input as the color image signal, a well know method can be used to convert to the lightness and chromaticity values. In Fig. 2, the target chromaticity value curve 28 is the line that connects point 24 (symbol O), point 25 (symbol A), point 26 (symbol B) and point 27 (symbol Z). By connecting the respective points by a straight line (line segments), calculation becomes easier.

In this embodiment, the target chromaticity value curve has only one pair of target chromaticity values for each lightness value. It is possible to have a plurality of target chromaticity value curves depending on the elements whose colors are to be adjusted. For example, it is possible to set a target chromaticity value curve for skin color, a target chromaticity value curve for the color of the sky and a target chromaticity value curve for the color of trees and plants. This is the same for the embodiments hereafter.

Fig. 3 shows the target chromaticity value curve 28 projected onto a two-dimensional plane (color plane) of chromaticity values CR and CB. The chromaticity values for all of the lightness values are projected onto the plane, so it forms a shape linked by straight lines. When the three-dimensional space is cut through by a specific lightness value, the target chromaticity values is expressed as a single point on the color plane. By taking the lightness value at point 25 (symbol A) to be La, and the chromaticity values at the same point to be CRa and CBa, the target chromaticity values at lightness La are the chromaticity values CRa and CBa at point 25. In Fig. 3, the coordinates for point 25 on the plane are given to be A(La, CRa, CBa). Similarly, the target chromaticity values at lightness Lb are the chromaticity values CRb and CBb at point 26 (symbol B). Also, target chromaticity values for lightness values greater than lightness value La and less than lightness value Lb, are chromaticity values on the line segment AB.

Here, the case of when the lightness value Lx of one pixel X (Lx, CRx, CBx) of the input color image is Ls (Lx = Ls) will be considered (X is not shown in the figures).

As shown in Fig. 3, the target chromaticity values are the chromaticity values CRs and CBs at point 29 (symbol S) on the target chromaticity value curve at lightness value Ls. The target chromaticity value CRs on the line segment AB can be expressed as shown below (Eq. 1) using values at point A and point B, and similarly the target chromaticity value CBs can also be expressed as shown below (Eq. 2).

[Equation 1]

$$CRs = CRa + \frac{CRb - CRa}{Lb - La} \times (Ls - La)$$

[Equation 2]

$$CBs = CBa + \frac{CBb - CBa}{Lb - La} \times (Ls - La)$$

The target chromaticity values are given in this way according to the lightness value.

Next, the method of bringing one pixel X (Lx, CRx, CBx) of the input color image close to the target chromaticity values CRs and CBs will be explained. In the following explanation, an expression that combines the two chromaticity values into one symbol will also be used. For example, the chromaticity values CRs and CBs are expressed as Cs. Therefore, it is also possible express the pixel X as X(Lx, Cx).

When bringing the chromaticity value Cx toward the chromaticity value Cs, it is possible to use the distance on the two-dimensional color plane between Cs and Cx, however, in that case, the color range to be adjusted is limited to a circular or simple rectangular area.

Therefore, in this embodiment, by constructing an adjustment chromaticity area using a plurality of triangular areas, it is made possible to calculate the range for the color to be adjusted quickly even for complicated areas. That method will be explained below.

Fig. 4 is a drawing explaining the adjustment chromaticity area that is a combination of triangular shaped areas. In this embodiment, the adjustment chromaticity area C0C1C2C3 is a combination of triangular areas 31 to 34. In this figure, only the chromaticity value in the adjustment chromaticity area 35 is brought close to the target chromaticity value Cs. In this embodiment, a quadrilateral adjustment chromaticity area was constructed by combining four triangular shaped areas, however it is not limited to the combination of four triangular shaped areas, and it is possible to use three or more triangular shaped areas. Also, a convex shaped adjustment chromaticity area makes it possible to maintain color continuity.

In the case of bringing the chromaticity value Cx of one pixel of the input color image (hereafter called the input chromaticity value) close to the target chromaticity value Cs, the internal ratio of the input chromaticity value will be found for the line segment that connects points of the intersection between the straight line that connects the input chromaticity value and the target chromaticity value and the straight lines of the sides around the adjustment chromaticity area that connect the vertices of the triangular areas, with the target chromaticity value. This internal ratio is used for evaluating the positional relationship of the input chromaticity value with respect to the target chromaticity value and the boundary of the adjustment chromaticity area. For an adjustment chromaticity area that is constructed from four triangular shaped areas, normally it is possible to find four internal ratios. Of those, the most suitable internal ratio is selected.

Fig. 5 is a drawing explaining the intersection between the straight line that connects the input chromaticity value and the target chromaticity value and the straight lines of the sides around the adjustment chromaticity area that connect the vertices of the triangular areas. The straight line 42 that connects the input chromaticity value Cx and the target chromaticity value Cs crosses the straight line 43 that connects the triangular vertices COC1 on a periphery of the adjustment chromaticity area at intersection 44. Therefore, it is possible to calculate the ratio at which the input chromaticity value Cx internally divides the line segment that connects the target chromaticity value Cs and intersection 44. Similarly, it is possible to find the intersection 46 with the straight line C1C2, the intersection 48 with the straight line C2C3 and the intersection with the straight line C3C0. When the input chromaticity value Cx is the intersection point 44, the internal ratio is taken to be '0', and when the input chromaticity value Cx is the target chromaticity value Cs, the internal ratio is taken to be '1', then when the input chromaticity value Cx is at the intersection 46 or intersection 48, the internal ratio is a value greater than '1'.

Also, in the case of an intersection that is closer to Cx than Cs, when the adjustment chromaticity area is a convex area, there is an intersection with another straight line that is further outside than the intersection with the straight line C0C1. In this case, the internal ratio with the other intersection that is not on the straight line C0C1 is larger than the internal ratio with the intersection 44 on the straight line C0C1. Therefore, the smallest internal ratio is the desired internal ratio.

Next, the case of when the input chromaticity value exists outside the adjustment chromaticity area (point 51 in Fig. 5) will be considered. In this case, as in the case of point 36, the internal ratios at intersections 46 and 48 are greater than 1. In the case of intersection 50, the value of the internal ratio is positive, however in the case of intersection 44, the internal ratio is negative. In other words, when the input chromaticity value exists outside the adjustment chromaticity area, the case of a negative internal ratio occurs. Therefore, when the smallest internal ratio is negative, color adjustment should not be performed.

Fig. 6 is a drawing explaining a triangular shaped area. Fig. 6 will be used to explain the method of finding the internal ratio Ki(x). Here, i indicates the number of a triangular vertex around the adjustment chromaticity area. The internal ratio Ki(x) for the input chromaticity value Cx36 can be found using the equation below (Eq. 3).

[Eq. 3]

$$K_i(x) = \frac{(CB_{i+1} - CB_i)\times CRx + (CR_i - CR_{i+1})\times CBx + CR_{i+1}\times CB_i - CR_i \times CB_{i+1}}{(CR_i - CR_{i+1})\times CBs + (CR_{i+1} - CRs))\times CB_i + (CRs - CR_i)\times CB_{i+1}}$$

The values CRi and CBi are component values of chromaticity value Ci at vertex 61, and values CRi+1 and CBi+1 are component values of chromaticity value Ci+1 at vertex 62. Also, CRs and CBs are component values of the target chromaticity value Cs at vertex 29, and CRx and CBx are component values of the input chromaticity value Cx36.

One point that should be noticed, is that except for the input chromaticity value Cx at vertex 36, the other values can be found in advance when the lightness value are expressed at specific steps. For example, when the lightness values are expressed as integer values (0 to 255), Cs is data of 256 patterns, and the chromaticity values Ci and Ci+1 at vertexes of the triangular area are fixed values or any values of a specified number of patterns that changes according to the lightness value. Therefore, the value obtained when dividing the coefficient of the CRx term of the numerator by the denominator, has a value of a specific number of patterns, the same is true for the value obtained when dividing the coefficient of the CBx term of the numerator by the denominator, and it can also be said that the same is true for the values obtained when the remaining terms of the numerator are divided by the denominator. In other words, by finding these values, which change according to the lightness value, in advance, it becomes possible to quickly find the internal ratio Ki(x) by performing two multiplications and two divisions.

The internal ratios Ki(x) of all of the triangular areas in the adjustment chromaticity area are found, and then the smallest internal ratio Kmin(x) is found. The minimum internal ratio that is found is compared with the threshold value Kth1, and when it is less than Kth1, the internal ratio is changed to Kth1. The value of Kth1 can be a value such as '0'. The specified threshold value Kth1 is a value for limiting the color adjustment to inside or outside the adjustment chromaticity area, and particularly, it can also change whether or not to not change anything or to only make small changes outside the adjustment color area.

The equation for selecting the internal ratios described above is given below (Eq. 4).

[Eq. 4]

$$Km(x) = \max(Kth1,\min(K_0(x),K_1(x),...,K_{n-1}(x)))$$

It is possible to use the found internal ratio as is, or it can be further compared with a specified threshold value Kth2, and when it is greater than Kth2, the internal ratio is replace with Kth2. Kth2 can be a value such as '0.6'. The selection equation for this case can be expressed as shown below (Eq. 5). The threshold value Kth2 has the function of suppressing changes when an input chromaticity value that is near the target chromaticity value is brought close to the target chromaticity value.

[Eq. 5]

$$Km(x) = \min(Kth2, \max(Kth1, \min(K_0(x),K_1(x),...,K_{n-1}(x))))$$

Here, n is the number of triangular shaped areas in the adjustment chromaticity area. Km(x) is the internal ratio that is found.

By constructing the adjustment chromaticity area using a combination of triangular shaped areas, and by finding the internal ratios corresponding to each triangular area, it is possible to easily set the positional relationship of the input chromaticity value with respect to the target chromaticity value and the boundary of the adjustment chromaticity area, even when the adjustment chromaticity area is not circular or a simple rectangular shape.

This internal ratio Km(x) is used to find the output chromaticity value Cx' at point 63 from the input chromaticity value Cx. Example of the equations for finding CR'x and CB'x are given below.

[Eq. 6]

$$CR'x = Km(x) \times CRs + (1 - Km(x)) \times CRx$$

[Eq. 7]

$$CB'x = Km(x) \times CBs + (1 - Km(x)) \times CBx$$

According to these equations, when the input chromaticity value Cx is located between the target chromaticity value Cs and boundary of the adjustment chromaticity area, the output chromaticity value CX' comes much closer to the target chromaticity value Cs than the input chromaticity value Cx, and when the input chromaticity value Cx is near the target chromaticity value Cs or boundary of the adjustment chromaticity area, the output chromaticity value Cx' changes very little from the input chromaticity value Cx. In this way, the naturalness of the color is not lost.

The threshold values Kth1 and Kth2 can be fixed values or be changed according to the lightness value or changed color (target chromaticity value).

Fig. 1 shows an image processing apparatus that is capable of the image processing method described above using hardware. This image apparatus comprises: a color adjustment unit 1, a target chromaticity value curve generation unit 2, a target chromaticity value generation unit 3, and a color adjustment coefficient generation unit 4.

Target chromaticity value curve data 16 is output from the target chromaticity value curve generation unit 2. The target chromaticity value generation unit 3 uses the target chromaticity value curve data 16 and the input lightness value 13 to output target chromaticity values 17 and 18. The color adjustment coefficient generation unit 4 uses the target chromaticity values 17 and 18, and input chromaticity values 11 and 12, to generate a color adjustment coefficient 19 for performing color adjustment. Here, the internal ratio can be used as the color adjustment coefficient 19. When generating the color adjustment coefficient it is further possible to use the lightness value 13. The color adjustment unit 1 uses the color adjustment coefficient 19 and the target chromaticity values 17 and 18 to adjust the input chromaticity values 11 and 12, and outputs the output chromaticity values 14 and 15.

The target chromaticity value generation unit 3 can use a look up table (or calculation) and the input lightness value 13 to generate chromaticity values 17 and 18. By using a combination of a plurality of straight lines as the target chromaticity value curve in the image processing method described above for finding the target chromaticity values Cs (CRs, CBs) from the lightness value Lx, it is possible to easily find the target chromaticity values Cs from equations of the lines.

Fig. 7 is a block diagram of the first color adjustment coefficient generation circuit, which is one example of the color adjustment coefficient generation unit. The first color adjustment coefficient generation unit comprises an internal ratio calculation coefficient generation unit 71, an internal ratio calculation unit 72 and an internal ratio selection unit 73. The target chromaticity values 17 and 18 that are output from the target chromaticity value generation unit 3 are input to the internal ratio calculation coefficient generation unit 71. The internal ratio calculation coefficient generation unit 71 uses the target chromaticity values 17 and 18, and the chromaticity values of the triangular vertices, which are the vertices on the periphery of the adjustment chromaticity area, to generate coefficients for calculating the internal ratios. An internal ratio coefficient is found for each of a plurality of triangular areas. It is possible to change the adjustment chromaticity area used for calculating the internal ratios according to the lightness value 13. The internal ratio calculation unit 72 uses the plurality of internal ratio coefficients 81 that are output from the internal ratio calculation coefficient generation unit 71, and the input chromaticity values 11 and 12 to find internal ratios 82 for all of the triangular shaped areas. The internal ratio selection unit 73 uses the plurality of internal ratios 82 that are output from the internal ratio calculation unit 72 and threshold values to select an internal ratio 19.

Fig. 8 is a block diagram of an internal ratio calculation coefficient generation circuit, which is one example of the internal ratio calculation coefficient generation unit 71 shown in Fig. 7. The internal ratio calculation coefficient generation circuit comprises subtracters 91 to 95, adder 96, multipliers 97 to 101 and dividers 102 to 104. Internal ratio calculation coefficient generation circuit is a circuit that finds: the quotient 81Ai obtained when dividing the coefficient for CRx in the first term of the numerator by the denominator of Equation 3 explained in the image processing method above; the quotient 81Bi obtained when dividing the coefficient for CBx in the second term of the numerator by the denominator; and the quotient 81Ci obtained when dividing the remaining term of the numerator by the denominator.

The subtracter 92 subtracts the chromaticity value CRi+1 (value on signal line 111) of the vertex i+1 of the triangular area from the chromaticity value CRi of vertex i (value on signal line 110), and the result is output on signal line 115, then the multiplier 99 multiplies it with the target chromaticity value CBs on signal line 18 that is output from target chromaticity value generation unit 3. The value obtained on signal line 120 is the value of the first term of the denominator of Equation 3. Similarly, the subtracter 93 subtracts target chromaticity value CRs on signal line 17 that is output from target chromaticity value generation unit 3 from the chromaticity value CRi+1 on signal line 111, and then the multiplier 100 multiplies the result (the value on signal line 116) with the chromaticity value CBi on signal line 112 of vertex i of the triangular area. The value obtained on signal line 121 is the second term of the denominator of Equation 3. Moreover, the subtracter 91 subtracts the chromaticity value CRi on signal line 110 from the target chromaticity value CRs (the value on signal line 17), and the multiplier 101 multiplies the result (the values on signal line 114) with the chromaticity value CBi+1 on signal line 113 of vertex i+1 of the triangular area. The value obtained on signal line 123 is the third term in the denominator of Equation 3. The adder 96 adds values on signal lines 120, 121 and 123, and the obtained value for the denominator of Equation 3 is output on signal line 124.

The subtracter 95 subtracts the chromaticity value CBi on signal line 112 from the chromaticity value CBi+1 on signal line 113 and outputs the result on signal line 122. This value becomes the coefficient for CRx in the numerator of Equation 3. The divider 104 divides the value on signal line 122 by the value of the denominator of Equation 3 on signal line 124. Therefore the coefficient for CRx (the value on signal line 81Ai) is output from the divider 104.

Also, the divider 102 divides the value on signal line 115 by the value of the denominator of Equation 3 on signal line 124, so the coefficient for CBx (the value on signal line 81Bi) is be found.

The multiplier 97 multiplies chromaticity value CRi+1 on signal line 111 with the chromaticity value CBi on signal line 112, and outputs the result on signal line 117. Moreover, the multiplier 98 multiplies the chromaticity value CRi on signal line 110 with the chromaticity value CBi+1 on signal line 113, and outputs the result on signal line 118. The subtracter 94 subtracts the value on signal line 118 from the value on signal line 117, and outputs the result on signal line 119. The divider 103 divides the value on signal line 119 by the denominator of Equation 3 on signal line 124. Therefore, the value that is not a coefficient for the input chromaticity values CRx and CBx is output on signal line 81Ci.

In Fig. 8 a circuit for generating the internal ratio calculation coefficient for one triangular area was explained, however, it is possible to configure the circuit with a plurality of similar circuits for a plurality of other triangular areas.

Fig. 9 is a block diagram of an internal ratio calculation circuit, which is one example of the internal ratio calculation unit 72 shown in Fig. 7. The internal ratio calculation circuits 131 to 134 comprise multipliers 135 and 136, and an adder 137. Blocks 132 to 134 can be constructed the same as block 131.

The internal ratio calculation coefficients are input to block 131 on signal lines 81A0 81B0 and 81C0 that are output from the internal ratio calculation coefficient generation unit 71. The subscript '0' of the signal line indicates the internal ratio calculation coefficients for the first triangular area. The multiplier 135 multiplies the chromaticity value CRx of the input image that is input from signal line 11 with the coefficient for CRx of Equation 3, which is the value on signal line 81A0, and outputs the result on signal line 141. Similarly, multiplier 136 multiplies the chromaticity value CBx of the input image that is input from signal line 12 with the coefficient for CBx of Equation 3, which is the value on signal line 81B0, and outputs the result on signal line 142. The adder 137 adds the value on signal line 141, the value on signal line 142 and the value of signal line 81C0, which is the value for the remaining term of Equation 3, and outputs the obtained internal ratio K0(x) on signal line 82A.

In this embodiment, the adjustment chromaticity area is constructed using four triangular areas. Therefore, the internal ratio calculation coefficients for the second triangular area are input to block 132 on signal lines 81A1, 81B1 and 81C1, and the internal ratio K1(x) is output on signal line 82B. Moreover, the internal ratio calculation coefficients for the third triangular area are input to block 133 on signal lines 81A2, 81B2 and 81C2, and the internal ratio K2(x) is output on signal line 82C. Similarly, the internal ratio calculation coefficients for the fourth triangular area are input to block 134 on signal lines 81A3, 81B3 and 81C3, and the internal ratio K3(x) is output on signal line 82D.

Fig. 10 is a block diagram of a first internal ratio selection circuit, which is one example of the internal ratio selection unit 73 shown in Fig. 7. The first internal ratio selection circuit 151 comprises comparators 152 to 155 and selectors 156 to 159.

The first internal ratio selection circuit 151 compares the minimum value of a plurality of internal ratios with a specified threshold value Kth1, and when the minimum internal ratio is less than the threshold value Kth1, outputs Kth1 as the internal ratio, otherwise it outputs the minimum internal ratio. The case of four triangular areas is shown.

At the same time that the internal ratio of the first triangular area is input from signal line 82A to the comparator 152, it is also input to the selector 156. Also, the internal ratio of the second triangular area is input from signal line 82B to the comparator 152, and is also input to the selector 156. The comparator 152 compares the first and second internal ratios, and outputs the result on signal line 161. Based on the comparison result on signal line 161, the selector 156 outputs the smaller internal ratio on signal line 162. The internal ratio of the third triangular area is input to the comparator 154 from signal line 82C, and the internal ratio of the fourth triangular area is input to the comparator 154 from signal line 82D, and they are compared by the comparator 153. The comparison result is output on signal line 163 and received by the selector 157, which then outputs the smaller internal ratio on signal line 164. The comparator 154 compares the internal ratios on signal lines 162 and 164, and outputs that result on signal line 165. Based on the results from the comparator 154, the selector 158 outputs the smaller internal ratio on signal line 166. Therefore, the minimum internal ratio of the four triangular areas is output on signal line 166. The specified threshold value Kth1 is input from signal line 167. The specified threshold value Kth1 has a value such as '0'. The comparator 155 compares the minimum internal ratio with Kth1 and outputs the comparison result on signal line 168. From the comparison result, the selector 159 outputs the larger value as the internal ratio on signal line 19.

Fig. 11 is a block diagram of the second internal ratio selection circuit, which is another example of the internal ratio selection unit 73 shown in Fig. 7. In addition to block 151 shown in Fig. 10, the second internal ratio selection circuit comprises a comparator 171 and selector 172.

The internal ratio that is output from block 151 is output on signal line 182. A specified second threshold value Kth2 is input from signal 181. The second threshold value Kth2 has a value such as '0.6'. The comparator 171 compares the internal ratio on signal line 182 with Kth2, and outputs the comparison result on signal line 183. The selector 172 outputs the smaller value as the final internal ratio on signal line 19. This is the circuit for realizing Equation 4 explained in the image processing method above.

Fig. 12 is a block diagram of the second color adjustment coefficient generation circuit, which is another example of the color adjustment coefficient generation unit 4 shown in Fig. 1. The second color adjustment coefficient generation circuit comprises: an internal ratio calculation coefficient generation unit 191, internal ratio calculation coefficient generation unit 192, internal ratio calculation unit 193 and internal ratio selection unit 194.

The target chromaticity values 17 and 18 that are output from the target chromaticity value generation unit 3 are input to the internal ratio calculation coefficient generation unit 191. The internal ratio calculation coefficient generation unit 191 uses the target chromaticity values 17 and 18, and the chromaticity values of the triangular vertices on the periphery of the adjustment chromaticity area to generate coefficients for calculating internal ratios. An internal ratio calculation coefficient 201 is found for each of a plurality of triangular areas. It is possible to change the adjustment chromaticity area used for calculating the internal ratios according to the lightness value. The internal ratio calculation coefficient 201 that is output from the internal ratio calculation coefficient generation unit 191 is stored in an internal ratio coefficient memory unit 192. The above process is performed for each lightness value of the input image. For example, when the lightness values have a level of 0 to 255, internal ratio calculation coefficients for 256 patterns will be stored. This is executed as pre processing.

When the lightness value 13 of the input image is input, the internal ratio calculation coefficient unit 192 outputs an internal ratio calculation coefficient 202 for each triangular area to the internal ratio calculation unit 193. The internal ratio calculation unit 193 uses the plurality of internal ratio calculation coefficients 202 and the input chromaticity values 11 and 12 to find internal ratios 203 for all of the triangular areas. The internal ratio selection unit 194 uses the plurality of internal ratios 203 that are output from the internal ratio calculation unit 193 and threshold values to select an internal ratio 19.

The internal ratio calculation coefficient generation unit 191, internal ratio calculation unit 193 and internal ratio selection unit 194 can be constructed using the same circuits as the internal ratio calculation coefficient generation unit 71, internal ratio calculation unit 72 and internal ratio selection unit 73 as explained for the first color adjustment coefficient generation circuit shown in Fig. 7. Also, the internal ratio calculation coefficient memory unit 192 can be realized using a look up table (memory).

By using the construction shown in Fig. 12, it is not necessary to calculate an internal ratio calculation coefficient for each input lightness value, and thus it is possible to quickly calculate the internal ratio.

It is also possible to store internal ratio calculation coefficients in the internal ratio calculation coefficient memory unit 192 that were calculated in advance by a personal computer or the like, without using the internal ratio calculation coefficient generation unit 191.

Fig. 13 is a block diagram of color adjustment circuits 211 and 212, which are one example of the color adjustment unit 1 shown in Fig. 1. The color adjustment circuits 211 and 212 comprise: multipliers 213 and 214, a subtracter 215 and an adder 216. The block 211 is a circuit for finding the adjusted chromaticity value CR'x, and block 212 is a circuit of finding the chromaticity value CB'x. Block 212 can be constructed using the same circuit as block 211.

The multiplier 213 multiplies the target chromaticity value CRs that is input from signal line 17 with the internal ratio Km(x) that is input from signal line 19. The value '1' is input from signal line 221, and the value 1-Km(x) is output from the subtracter 215 on signal line 222. The multiplier 214 multiplies the input chromaticity value CRx that is input from signal line 11 with the output from the subtracter 215, and outputs the result on signal line 224. The adder 216 adds the values on signal lines 223 and 224, and outputs the output chromaticity value CR'x on signal line 14. Similarly, the target chromaticity value CBs is input from signal line 18 and the input chromaticity value CBx is input from signal line 12, and block 212 outputs the output chromaticity value CB'x on signal line 15.

By using the construction described above, the image process apparatus of this first embodiment changes the target chromaticity value according to the lightness value and prevents the color of the output image from become uniform and unnatural.

Moreover, since it is not necessary to limit the color space to be adjusted to a circle or simple rectangular shape, it is possible to quickly obtain a more natural image.

(Second Embodiment)

Fig. 14 is a block diagram showing the image processing apparatus of the second embodiment of the invention, and Fig. 15 is a drawing explaining a target value display apparatus, which is one example of the target value display unit.

The image processing apparatus shown in Fig. 14 comprises: a color adjustment unit 231, target chromaticity value curve generation unit 232, target chromaticity value generation unit 233, color adjustment coefficient generation unit 234 and target chromaticity value display unit 236.

The target chromaticity value curve generation unit 232 outputs target chromaticity value curve data 246 to the target chromaticity value generation unit 233. Also, the target chromaticity value curve generation unit 232 outputs target chromaticity value curve data 250 for the display to the target chromaticity value display unit 236. The target chromaticity value curve data 246 and target chromaticity value curve data 250 for the display can be the same data. The target chromaticity value display unit 236 uses the target chromaticity value curve data 250 for the display to convert the target chromaticity value curve to image data and to display the image data. The target chromaticity value generation unit 233 uses the target chromaticity value curve data 246 and the input lightness value 243 to output the target chromaticity values 247 and 248. The color adjustment coefficient generation unit 234 uses the target chromaticity values 247 and 248, and input chromaticity values 241 and 242 to generate a color adjustment coefficient 249 for color adjustment. The internal ratio can be used as the color adjustment coefficient 249. When the user looks at the image displayed on the target chromaticity value display unit 236 and inputs a color adjustment cancellation signal 251, the color adjustment coefficient generation unit 234 outputs a color adjustment coefficient 249 such that color adjustment is not performed. When generating the color adjustment coefficient, it is also further possible to use the lightness value 243. The color adjustment unit 231 uses the color adjustment coefficient 249 and target chromaticity values 247, 248 to adjust the input chromaticity values 241 and 242, and output the output chromaticity values 244 and 245.

Here, the image processing apparatus of the second embodiment shown in Fig. 14 differs from the image processing apparatus of the first embodiment shown in Fig. 1 in that it has a target chromaticity value display unit 236, while the other units are the same as those of the image processing unit of the first embodiment.

The color adjustment process is mainly performed based on natural colors and the colors in the person's memory, however, it is possible that the color differs from the user's sense or that the actual input image differs from the colors set in memory. In that case, the desired image is not obtained even though color adjustment is performed to adjust the color to the target color. Therefore, the target chromaticity value display unit 236 is used to display the colors on the target chromaticity value curve. The user can then decide whether or not to perform the color adjustment process based on the displayed colors. When the user decides not to perform color adjustment, the user can use the color adjustment cancellation signal 251 such that the value '0' is output on signal line 249 as the internal ratio. This circuit (not shown in the figure) can be constructed by placing a selector in the output stage of the color adjustment coefficient generation unit 234.

Fig. 15 is a drawing explaining a target chromaticity value display apparatus, which is one example of the target chromaticity value display unit 236. The target chromaticity value display apparatus displays the target colors according the lightness value of the target chromaticity value curve. In Fig. 15, the target color is displayed from where the lightness value is low 261 to where the lightness value is high 262. This makes it possible for the user to visually check the colors for all lightness values to determine which color to adjust the color to. The display form of the target chromaticity value display unit 236 is not limited to this.

With the construction described above, it is possible for the user to decide before adjustment whether or not to perform color adjustment, and thus it is not necessary to perform unnecessary print outs.

(Third Embodiment)

Fig. 16 is a block diagram showing the image processing apparatus of a third embodiment of the invention; Fig. 17 is a drawing explaining the target chromaticity value curve; Fig. 18 is a drawing explaining two target chromaticity value curves that are projected onto a two-dimensional plane; Fig. 19 is a drawing explaining the selection method of selecting a target chromaticity value curve that is projected on a two-dimensional plane; and Fig. 20 is a drawing explaining a target chromaticity value curve selection apparatus, which is one example of the target chromaticity value curve selection unit.

First, before explaining the image processing apparatus, Fig. 17 to Fig. 19 will be used to explain the image processing method of this embodiment.

Fig. 17 is a drawing explaining the target chromaticity value curve surface. Similar to Fig. 2, Fig. 17 is a color space that is expressed by the axis 301 of the lightness, the axis 302 of the chromaticity component CR and the axis 303 of the chromaticity component CB. In Fig. 2 the target chromaticity value curve was explained, however, in this embodiment, the target chromaticity value curve surface is set, and the target chromaticity value curve is selected from the target chromaticity value curve surface. In this embodiment, an area that contains two target chromaticity value curves is set as the target chromaticity value curve surface. Also, the target chromaticity value curves are respectively expressed by connecting together three line segments. In other words, the curve surface passes through point 304 (symbol O), point 305 (symbol E), point 306 (symbol F), point 307 (symbol Z), point 308 (symbol G) and point 309 (symbol H). By making a surface, each lightness value has a plurality of chromaticity values.

Fig. 18 is a drawing explaining two target chromaticity value curves that are projected onto a two-dimensional plane (color plane). One target chromaticity value curve 311 is a curve comprising a plurality of straight lines that pass through point E and point F, and the other target chromaticity value curve 312 is a curve comprising a plurality of straight lines that pass though point G and point H. In order to simplify the explanation, the lightness values at point E and point G are equal, and the lightness values at point F and point H are equal. Also, only line segment EF and line segment GH will be used in the explanation.

When the user selects the target chromaticity value curve (straight line), one end of the target chromaticity value curve is such that it is located in the line segment EG that connects point E and point G (arrow 313). Moreover, the other end of the target chromaticity value curve is located such that it is in the line segment FH that connects point F and point H (arrow 314). In this way, it is possible for the user to select a target chromaticity value curve.

Fig. 19 is a drawing explaining the selection method of selecting a target chromaticity value curve that is projected on a two-dimensional plane. Point 321 (symbol P) and point 322 (symbol Q) on the selected target chromaticity value curve are found. The lightness value Le and two chromaticity values CRe and CBe at point E are expressed as E (Le, CRe, CBe). Similarly, by expressing these values for point G and point P as G(Lg, CRg, CBg) and P(Lp, CRp, CBp), the chromaticity values at point P can be given by the equations below.

[Equation 8]

$$CRp = CRe + \frac{CRg - CRe}{W} \times Pos$$

[Equation 9]

$$CBp = CBe + \frac{CBg - CBe}{W} \times Pos$$

Here, 'W' indicates the adjustment space, and 'Pos' indicates the adjustment point (point selected by the user). For example, when the value of 'W' is taken to be '10', the adjustment point can be set to an integer value from 0 to 10.

By using Equation 8 and Equation 9, it is possible to find the chromaticity value at point P. When the lightness values for point E and point G are different, it is also possible to perform interpolation for the lightness value. The same can also be performed for point F and point H, to find the chromaticity value at point Q.

The image processing apparatus shown in Fig. 16 comprises: a color adjustment unit 271, target chromaticity value curve surface generation unit 272, target chromaticity value curve selection unit 275, target chromaticity value generation unit 273 and color adjustment coefficient generation unit 274.

The target chromaticity value curve surface generation unit outputs the target chromaticity value curve surface data 290 to the target chromaticity value curve selection unit 275. With the target chromaticity value selection unit 275, the user selects the target chromaticity value curve. A method of the user making a selection based on preset data such as reddish skin color or yellowish skin color can be used as the selection method. The selected target chromaticity value curve data 291 is output to the target chromaticity value generation unit 273. The target chromaticity value generation unit 273 uses the target chromaticity value curve data 291 and input lightness value 283 to output the target chromaticity values 287 and 288. The color adjustment coefficient generation unit 274 uses the target chromaticity values 287 and 288, and the input chromaticity values 281 and 282 to generate a color adjustment coefficient 289 for performing color adjustment. The internal ratio can be used as the color adjustment coefficient 289. It is also possible to further use the lightness value 283 when generating the color adjustment coefficient. The color adjustment unit 271 uses the color adjustment coefficient 289 and target chromaticity values 287 and 288 to adjust the values of the input chromaticity values 281 and 282, and output the output chromaticity values 284 and 285.

The image processing apparatus of the embodiment shown in Fig. 16 differs from the image processing apparatus of the first embodiment shown in Fig. 1 in that it uses a target chromaticity value curve surface generation unit 272 and target chromaticity value curve selection unit 275 instead of the target chromaticity value curve generation unit 2 to generate the target chromaticity value curve, and the remaining parts use the same circuits as in the image processing apparatus shown in Fig. 1.

Fig. 20 is a drawing explaining a target chromaticity value curve selection apparatus, which is one example of the target chromaticity value curve selection unit 278. The target chromaticity value selection apparatus 331 comprises a movable part 332, and this movable part 332 moves within a movable range 333. This movable range 333 corresponds to the space W in Equation 8 and Equation 9, and the position of the movable part 332 indicates the adjustment point Pos. In other words, by moving the movable part 332, the target chromaticity value curve changes, and the target chromaticity value curve data 291 after the change is output to the target chromaticity value generation unit 273.

Using the construction described above, it is possible for the user to select the target chromaticity value curve itself, and thus it is possible for the user to adjust a desired color as the target.

(Fourth Embodiment)

Fig. 21 is a block diagram showing the image processing apparatus of a fourth embodiment of the invention.

The image processing apparatus shown in Fig. 21 comprises: a color adjustment unit 341, target chromaticity value curve surface generation unit 342, target chromaticity value curve selection unit 345, target chromaticity value display unit 346, target chromaticity value generation unit 343 and color adjustment coefficient generation unit 344.

The target chromaticity value curve surface generation unit 342 outputs the target chromaticity value curve surface data 356 to the target chromaticity value curve selection unit 345. With the target chromaticity value selection unit 345 it is possible for the user to select the target chromaticity value curve, however, first the standard target chromaticity value curve data 358 is output to the target chromaticity value display unit 346. The target chromaticity value display unit 346 uses the target chromaticity value curve data 358 to display a target chromaticity value for each lightness value. The user selects the desired target chromaticity value curve using the target chromaticity value curve selection unit 345 based on the image displayed by the target chromaticity value display unit 346. The selected target chromaticity value curve data 358 is input to the target chromaticity value display unit 346 and an image of the selected target chromaticity value is displayed. Finally, the target chromaticity value curve data 357 that was selected by the target chromaticity value curve selection unit 345 is output to the target chromaticity value generation unit 343. The target chromaticity value generation unit 343 uses the target chromaticity value curve data 357 and input lightness value 353 to output the target chromaticity values 359 and 360. The color adjustment coefficient generation unit 344 uses the target chromaticity values 359 and 360, and input chromaticity values 351 and 352 to generate a color adjustment coefficient 361 for performing color adjustment. The internal ratio can be used as the color adjustment coefficient. It is also further possible to use the lightness value 353 when generating the color adjustment coefficient. The color adjustment unit 341 uses the color adjustment coefficient 361 and target chromaticity values 359 and 360 to adjust the value of the input chromaticity values 351 and 352, and output the output chromaticity values 354 and 355.

The image processing apparatus of the embodiment shown in Fig. 21 differs from the image processing apparatus of the third embodiment shown in Fig. 16 in that it comprises a target chromaticity value display unit 346, and the remaining parts use the same units as the image processing apparatus of the third embodiment. Also, the target chromaticity value display unit 346 can use the same unit as the target chromaticity value display unit 236 of the image processing unit of the second embodiment shown in Fig. 14.

With the construction described above, it is possible to display the target chromaticity value curve data that was selected by the target chromaticity value curve selection unit 345 on the target chromaticity value display unit 346, so it is possible to set fine colors while viewing the display, and thus it is possible to obtain the image desired by the user.

(Fifth Embodiment)

Fig. 22 is a block diagram showing a CPU system that makes possible the image processing technique of this invention using software. This CPU system can be used when accomplishing the image processing programs of the fifth to the eighth embodiments of the invention.

The CPU system shown in Fig. 22 comprises a CPU (Central Processing Unit) 372, ROM (Read Only Memory) 371, RAM (Random Access Memory) 373 and input/output port 374.

In this CPU system, the CPU 372 uses the RAM 373, a working memory, and executes the program stored in ROM 371. The input/output port 374 performs input 382 and output 383 of the image. The image data are transferred to the RAM 373 from the input/output port 374, and image processing is executed according to the program in ROM 371. It is also possible to transfer the program from the input/output port 374 via the bus 381 to the RAM 373 and to execute the program from RAM. When processing ends, the image data are output via the input/output port 383. It is also possible for image processing to be performed by a personal computer, workstation or the like.

Fig. 23 is a flowchart of the image processing program of the fifth embodiment of the invention. The image processing program of this fifth embodiment is a program that enables the processing of the image processing apparatus of embodiment 1 to be performed by software.

The image processing programs explained in the fifth to the eighth embodiments can be stored on various forms of computer readable recording media, such as HDD, MO, FD CD-ROM or the like.

After the image processing program of this invention starts (step 1), first initial settings are performed in step 2. In the initial settings, first the target chromaticity value curve data are set. In step 3, the object pixel data of the input image data are read. In the case that the input image data are not expressed by lightness and chromaticity, well known color space conversion is performed. For example, the signal is converted from a RGB signal to Y, R-Y and B-Y signals. In step 4, the target chromaticity values are generated using the input lightness value and target chromaticity value curve of the object pixel. In step 5, a color adjustment coefficient for performing color adjustment is generated using the target chromaticity values obtained in step 4, the input lightness value of the object pixel, the input chromaticity values of the object pixel and chromaticity values of the vertices of the triangular areas of the adjustment chromaticity area. The internal ratio can be used as the color adjustment coefficient. In step 6, color adjustment of the input chromaticity values of the object pixel is performed using the color adjustment coefficient obtained in step 5. In step 7, whether or not color adjustment has been completed for all pixels is checked, and when adjustment has not been completed for all pixels, the process returns to step 3, and when adjustment has been completed for all pixels, the color adjustment process ends (step 8).

Fig. 24 is a flowchart that explains in more detail the contents of the generation of the color adjustment coefficient (step 5) shown in Fig. 23.

In step 11, the internal ratio calculation coefficients described above are generated. In step 12 the generated internal ratio calculation coefficients are used to calculate the internal ration of one triangular area. In step 13 whether or not the internal ratios have been found for all of the triangular areas of the adjustment chromaticity area is checked, and when not all of the internal ratios have been found, the process returns to step 11. After the internal ratios of all of the triangular areas have been calculated, the internal ratio is selected in step 14.

In the initial settings of step 2, by calculating the internal ratio calculation coefficients explained in Fig. 12 for all lightness values beforehand, and putting them in the form of a table (array), it is possible to shorten the overall processing time. In that case, generation of the target chromaticity values in step 4 is not necessary, and the process performs direct generation of the color adjustment coefficient in step 5 using the lightness value and the chromaticity values obtained by reading the object pixel data in step 3. Therefore, generation of the internal ratio calculation coefficients performed in step 11 is performed in step 2. This high speed method can be used for the following embodiments as well.

(Sixth Embodiment)

Fig. 25 is a flowchart of the image processing program of the sixth embodiment of the invention. The image processing program of this sixth embodiment is a program that enables the processing of the image processing apparatus of the second embodiment to be performed by software.

After the image processing program of this invention starts (step 21), first, in step 22, the target chromaticity value curve data is used to display a target chromaticity value image corresponding to all lightness values. It is possible to output the target chromaticity value image to the display apparatus via the input/output port 374. In step 23, the user selects whether or not to perform color adjustment based on the displayed target chromaticity value image. In the case that color adjustment will not be performed, the process advances to step 30 and ends. In the case of performing color adjustment, initial setting is performed in step 24. In the initial setting, first, the target chromaticity value curve data is set. In step 25, the object pixel data of the input image data is read. In the case that the input image data is not expressed by lightness and chromaticity, well known color space conversion is performed. For example, the RGB signal is converted to Y, R-Y and B-Y signals. In step 26, target chromaticity values are generated using the input lightness value and target chromaticity value curve of the object pixel. In step 27, a color adjustment coefficient for performing color adjustment is generated using the target chromaticity values obtained in step 26, the input lightness value of the object pixel, input chromaticity values of the object pixel and chromaticity values of the vertices of the triangular areas of the adjustment chromaticity area. The internal ratio can be used as the color adjustment coefficient. In step 28, color adjustment of the input chromaticity values of the object pixel is performed using the color adjustment coefficient obtained in step 27. In step 29, whether or not color adjustment has been completed for all pixels is checked, and when adjustment has not been completed for all pixels, the process returns to step 25, and when adjustment has been completed for all pixels, the color adjustment process ends (step 30).

(Seventh Embodiment)

Fig. 26 is a flowchart of the image processing program of the seventh embodiment of the invention. The image processing program of this seventh embodiment is a program that enables the processing of the image processing apparatus of the third embodiment to be performed by software.

After the image processing program of this invention starts (step 31), first, in step 32, the target chromaticity value curve is selected from the target chromaticity value curve surface. In the initial setting of step 33, first, the target chromaticity value curve data is set. In step 34, the object pixel data of the input image data is read. In the case that the input image data is not expressed by lightness and chromaticity, well known color space conversion is performed. For example, the RGB signal is converted to Y, R-Y and B-Y signals. In step 35, target chromaticity values are generated using the input lightness value and target chromaticity value curve of the object pixel. In step 36, a color adjustment coefficient for performing color adjustment is generated using the target chromaticity values obtained in step 35, the input lightness value of the object pixel, the input chromaticity values of the object pixel, and the chromaticity values of the vertices of the triangular areas of the adjustment chromaticity area. The internal ratio can be used as the color adjustment coefficient. In step 37, color adjustment of the input chromaticity values of the object pixel is performed using the color adjustment coefficient obtained in step 36. In step 38, whether or not color adjustment has been completed for all pixels is checked, and when adjustment has not been completed for all pixels, the process returns to step 34, and when adjustment has been completed for all pixels, the color adjustment process ends (step 39).

(Eighth Embodiment)

Fig. 27 is a flowchart of the image processing program of the eighth embodiment of the invention. The image processing program of this eighth embodiment is a program that enables the processing of the image processing apparatus of the fourth embodiment to be performed by software.

After the image processing program of this invention starts (step 41), first, in step 42, preset target chromaticity data curve data is used to display a target chromaticity value image corresponding to all lightness values. The target chromaticity value image can be output to the display apparatus via the input/output port 374. In step 43, the user selects whether or not to perform color adjustment using this target chromaticity value curve based on the displayed target chromaticity value image. In the case that color adjustment using this target chromaticity value curve will not be performed, the process advances to step 44 and the target chromaticity value curve is selected (adjusted). Steps 42 to 44 are repeated until the user selects the desired target chromaticity value curve. After the target chromaticity value curve has been selected, initial setting is performed in step 45. In the initial setting, first, the selected target chromaticity value curve data is set. In step 46, the object pixel data of the input image data is read. In the case that the input image data is not expressed by lightness and chromaticity, well known color space conversion is performed. For example, the RGB signal is converted to Y, R-Y and B-Y signals. In step 47, the target chromaticity values are generated using the input lightness value and target chromaticity value curve of the object pixel. In step 48, a color adjustment coefficient for performing color adjustment is generated using the target chromaticity values obtaining in step 47, the input lightness value of the object pixel, the input chromaticity values of the object pixel, and chromaticity values of the vertices of the triangular areas of the adjustment chromaticity area. It is possible to use the internal ratio as the color adjustment coefficient. In step 49, color adjustment of the input chromaticity values of the object pixel is performed using the color adjustment coefficient obtained in step 48. In step 50, whether or not color adjustment has been completed for all pixels is checked, and when adjustment has not been completed for all pixels, the process returns to step 46, and when adjustment has been completed for all pixels, the color adjustment process ends (step 51).

(Ninth Embodiment)

As in the first embodiment, it is possible to not use the obtained internal ratio Km(x) as is, but to multiply it by a specified value to control the degree of change.

It is possible to fine output chromaticity values Cx'63 using the internal ratio Km(x) for all lightness values, however, by limiting the lightness value of the color to be changed, it is possible to prevent unnecessary color change. For example, when adjusting green color, it is very likely that green having a high lightness value is not the green of tree and plants, so there is a possibility that the image quality will become poor if all green color is changed.

Therefore, by multiplying Km(x) by a set first gain G(L) for each lightness values, the internal ratio Km(x) can be artificially reduced to suppress the change of color. Fig. 28 is a drawing explaining the first gain G. From point 392 (symbol T) to point 393 (symbol U), the internal ratio Km(x) is used as is without being changed. In other words, the first gain G is 1.0. Point 392 (symbol T) can be made the same lightness value as point 25 (symbol A) in Fig. 2, and point 393 (symbol U) can be made the same lightness value as point 26 (symbol B) in Fig. 2. The first gain is decreased for lightness areas other than the area from T to U. The first gain for a point inside the area from T to U is taken to be 1.0, and there is a method of reducing the gain going away from that point, however, generally, usually it is rare that lightness value of the color to be adjusted will be at one point, so it is not practical.

[Equation 10]

$$Kg(x) = Km(x) \times G(Lx)$$

Here, G(Lx) indicates the first gain for the input lightness value Lx. The output chromaticity values Cx' at point 63 are found from the input chromaticity values Cx using the corrected internal ratio Kg(x) found from Equation 10. Equation 11 and Equation 12 below are example of equations for finding CR'x and CB'x.

[Equation 11]

$$CR'x = Kg(x) \times CRs + (1 - Kg(x)) \times CRx$$

[Equation 12]

$$CB'x = Kg(x) \times CBs + (1 - Kg(x)) \times CBx$$

An image processing method using this kind of first gain was realized using hardware, and is the image processing apparatus shown in Fig. 29. In addition to a color adjustment unit 1, target chromaticity value curve generation unit 2, target chromaticity value generation unit 3, and color adjustment coefficient generation unit 4, this image processing apparatus comprises a first gain generation unit 5 and first color adjustment coefficient correction unit 6.

The first gain generation unit 5 generates the first gain 10 using the lightness value 13. The first color adjustment coefficient correction unit 6 corrects the color adjustment coefficient 19 by multiplying the color adjustment coefficient 19 by the first gain 10 to generate a corrected color adjustment coefficient 20. In this embodiment, the color adjustment unit 1 uses the corrected color adjustment coefficient 20 and target chromaticity values 17 and 18 to adjust the input chromaticity values 11 and 12 and to output the output chromaticity values 14 and 15.

Fig. 30 is a block diagram of a first gain generation circuit, which is one example of this first gain generation unit 5, and a first color adjustment coefficient correction circuit, which is one example of the first color adjustment coefficient correction unit 6. The first gain generation circuit can be constructed using a look up table 401. The data shown in Fig. 28 is stored in the look up table as first gain data. Instead of a look up table, it is possible to calculate the gain data values shown in Fig. 28 each time according to the input lightness value.

The first gain 10 that is output from the first gain generation circuit is input to the first color adjustment coefficient correction circuit. The first color adjustment coefficient correction circuit can be constructed with a multiplier 402. The internal ratio 19 or color adjustment coefficient that is input to the first color adjustment coefficient correction circuit 6 is multiplied by the first gain 10 in the multiplier 402, and output as the first corrected color adjustment coefficient 20.

In this case, as shown in Fig. 31, in the color adjustment circuit, the multiplier 213 multiplies the target chromaticity value CRs that is input on signal line 17 with the internal ratio Kg(x), which is the first corrected color adjustment coefficient that is input from signal line 20. The value '1' is input from signal line 221, and the value 1-Kg(x) is output from the subtracter 215 on signal line 222. The multiplier 214 multiplies the input chromaticity value CRx that is input from signal line 11 with the output from the subtracter 215, and outputs the result on signal line 224. The adder 216 adds the values of signal lines 223 and 224, and outputs the output chromaticity value CR'x on signal line 14. Similarly, the target chromaticity value CBs is input from signal line 18, and the input chromaticity value CBx is input from signal line 12, and block 212 outputs the output chromaticity value CB'x on signal line 15.

By using the construction described above, the image processing apparatus of the ninth embodiment changes the target chromaticity value according to the lightness value and prevents the output image color from becoming uniform and unnatural, and further generates a first gain from the input lightness value to suppress color adjustment of unnecessary lightness values, so it is possible to prevent the image quality from becoming poor due to color adjustment and to obtain a high quality image.

(Tenth Embodiment)

Fig. 32 is a block diagram of the image processing apparatus of the tenth embodiment. This image processing apparatus comprises: a color adjustment unit 231, target chromaticity value curve generation unit 232, target chromaticity value generation unit 233, color adjustment coefficient generation unit 234, second gain generation unit 411, and second color adjustment coefficient correction unit 412.

The target chromaticity value curve generation unit 232 outputs target chromaticity value curve data 246 to the target chromaticity value generation unit 233. The target chromaticity value generation unit 233 uses the target chromaticity value curve data 246 and input lightness value 243 to output target chromaticity values 247 and 248. The color adjustment coefficient generation unit 234 uses the target chromaticity values 247 and 248, and input chromaticity values 241 and 242 to generate a color adjustment coefficient 249 for performing color adjustment. The internal ratio can be used as the color adjustment coefficient 249. The second gain generation unit 411 uses the input chromaticity values 241 and 242 to generate a second gain 421 that becomes smaller the closer the color is to achromatic color. The second color adjustment coefficient correction unit 412 corrects the color adjustment coefficient 249 using the second gain 421 and generates a corrected color adjustment coefficient 251. The color adjustment unit 231 uses the corrected color adjustment coefficient 251, and target chromaticity values 247 and 248 to adjust the input chromaticity values 241 and 242, and outputs output chromaticity values 244 and 245.

This differs from the image processing apparatus of the ninth embodiment in that there is a second gain generation unit 411 instead of the first gain generation unit, and a second color adjustment coefficient correction unit 412 instead of the first color adjustment coefficient correction unit, however the other units can be realized by using the same units as in the image processing apparatus of the first embodiment.

Fig. 33 is a drawing explaining the second gain. The second gain is a gain that becomes smaller from a chromatic color toward an achromatic color (origin O). When performing color adjustment, human perception of change in the achromatic portion is greater than perception of change in the chromatic portion. In the case where an achromatic object is colored, there is a trend to more easily remember unnaturalness than when there is a change of a chromatic color, even when the color difference is the same. Therefore, the second gain becomes smaller as the color becomes closer to an achromatic color, in order to suppress color adjustment near an achromatic color. In Fig. 33, when an input chromaticity value is inside the circle 437 (for example input chromaticity value 436), the second gain is made to be less than 1.0 in order to make the color adjustment coefficient small.

Fig. 34 is a drawing explaining the change in the second gain, where the distance from the origin is shown along the horizontal axis, and the second gain is shown along the vertical axis. The distance 447 of point 446 corresponds to the distance on the color plane from the origin O in Fig. 33 to the target chromaticity value Cs. The second gain at this point is taken to be 1.0, and the second gain becomes smaller the closer to the origin. The method of generating the second gain is not limited to this.

Fig. 35 is a block diagram showing a second gain generation circuit, which is an example of the second gain generation unit 411 in Fig. 32, and a second color adjustment coefficient correction circuit, which is and example of the second color adjustment coefficient correction unit 412. The second gain generation circuit comprises: multipliers 451, 452, adder 453 and look up table 454.

The multiplier 451 takes the square of the input chromaticity value CRx 241, and similarly, the multiplier 452 takes the square of the input chromaticity value CBx 242. The adder 453 adds the squared values 461 and 462, and inputs the obtained value 463 to the look up table 454. The look up table outputs the second gain 421 according to the distance from the origin O. Before the value 463 is input to look up table, it is also possible to calculate the square root of the value 463 and generate the distance from the origin O.

The second color adjustment coefficient correction circuit can be constructed using a multiplier 455. The multiplier 455 multiplies the color adjustment coefficient 249 with the second gain 421 to generate the corrected color adjustment coefficient 422.

By correcting the color adjustment coefficient with the second gain, which becomes smaller as the color is near to an achromatic color, it becomes possible to suppress unnecessary change in the color of the portion near the achromatic color, and thus it is possible to obtain high image quality.

(Eleventh Embodiment)

Fig. 36 is a block diagram of the image processing apparatus of the eleventh embodiment of the invention. This image processing apparatus comprises: a color adjustment unit 471, target chromaticity value curve generation unit 472, target chromaticity value generation unit 473, color adjustment coefficient generation unit 474, first gain generation unit 476, second gain generation unit 475, and third color adjustment coefficient correction unit 478.

The target chromaticity value curve generation unit 472 outputs target chromaticity value curve data 486 to the target chromaticity value generation unit 473. The target chromaticity value generation unit 473 uses the target chromaticity value curve data 486 and input lightness value 483 to output target chromaticity values 487 and 488. The color adjustment coefficient generation unit 474 uses the target chromaticity values 487 and 488, and input chromaticity values 481 and 482 to generate a color adjustment coefficient 489 for performing color adjustment. It is possible to use the internal ratio as the color adjustment coefficient 489. When generating the color adjustment coefficient, it is also further possible to use the lightness value 483. The first gain generation unit 476 uses the lightness value 483 to generate a first gain 492. The second gain generation unit 475 uses the input chromaticity values 481 and 482, and the target chromaticity values 487 and 488 to generate a second gain that becomes smaller nearer to the achromatic color. The third color adjustment coefficient correction unit 478 uses the first gain 492 and second gain 491 to correct the color adjustment coefficient 489, and generates a corrected color adjustment coefficient 490. The color adjustment unit 471 uses the corrected color adjustment coefficient 490, and target chromaticity values 487 and 488 to adjust the input chromaticity values 481 and 482, and outputs the output chromaticity values 484 and 485.

This differs from the image processing apparatus of the ninth embodiment in that the second gain generation unit 475 has been added, and instead of the first color adjustment coefficient correction unit, there is a third color adjustment coefficient correction unit 478, while the other units can be realized by using the same units as in the image processing apparatus of the ninth embodiment.

Fig. 37 is a block diagram of a second gain generation circuit, which is another example of the second gain generation unit 475. The second gain generation circuit comprises multipliers 501 to 504, adders 505, 506, divider 507 and look up table 508.

The multiplier 503 takes the square of the input chromaticity value CRx 481, and similarly the multiplier 504 takes the square of the input chromaticity value CBx 482. The adder 506 adds the squared values 513 and 514, and inputs the obtained value 516 to the divider 507. Similarly, the target chromaticity values 487 and 488 are squared and added, and the obtained value 515 is input to the divider 507. The divider 507 finds the ratio of the value 516 with respect to the value 515.

The ratio 517 is input to the look up table 508. When the ratio is 1 or greater, the look up table outputs 1.0 as the second gain 491, and when the ratio is less than 1, the square root of the ratio is output as the second gain 491.

In this embodiment, the second gain generation unit 475 uses the target chromaticity values 487 and 488 in addition to the input chromaticity values 481 and 482, however, it can also be constructed such that it uses just the input chromaticity values 481 and 482, and in that case the circuit can be as that shown in Fig. 35.

Fig. 38 is a block diagram of a third color adjustment coefficient correction circuit, which is an example of the third color adjustment coefficient correction unit 478. The third color adjustment coefficient correction circuit comprises multipliers 521 to 524. The multiplier 524, which is the first gain correction unit 526, multiplies the first gain 492 with the value 532. The value 532 is a value that is set by the operator, and in the case of using the first gain 492 as is, a value of 1.0 is used, and in the case of decreasing the first gain, a value that is less than 1.0 should be set. Similarly, multiplier 523, which is the second gain correction unit 525, corrects the second gain 491. The multiplier 521 multiplies the first correction gain 534 with the color adjustment coefficient 489, and the multiplier 522 multiplies the obtained corrected color adjustment coefficient 533 with the second correction gain 535. The obtained value is the corrected color adjustment coefficient 490.

The method used by the user for correcting the first gain and second gain is not limited to the method of this embodiment, for example, a method in which the slope of the gain is changed and the range where the gain is fixed is changed is possible.

Also, in this embodiment, there is a first gain correction unit 526 and second gain correction unit 525, and the operator can correct the first gain and second gain, however, it is possible to correct just one of the gains, or to not correct either.

By using the above construction, the image processing apparatus has the advantages of the tenth embodiment as well as the advantages of the ninth embodiment, and furthermore it is possible to perform minute gain adjustment. For example, in comparison to performing correction with just the first gain, correcting the color adjustment coefficient with the second gain is effective in making it possible to reduce the amount of correction by the first gain.

In the ninth, the tenth and the eleventh embodiments, the target chromaticity value curve was explained as a preset curve, however, by setting a target chromaticity value curve surface in the same way as other embodiments, and making it possible for the operator to select the target chromaticity value curve itself from the curve surface, it becomes possible to perform color adjustment the matches the sense of the operator.

Color adjustment processing often performs color adjustment based on natural colors or colors in the operator's memory, however, the color differs from the operator's sense, or the actually input image differs from the color set in memory. In that case, the desired image cannot be obtained even when the color is adjusted to the target color. Therefore, the target chromaticity value display unit 236 as explained in the second embodiment is used to display the colors on the target chromaticity value curve. The operator can decide whether or not to perform the color adjustment process based on the displayed colors. Moreover, by using it together with the target chromaticity value curve selection unit 278, it is possible to display the selected target chromaticity value curve data, so it is possible to visually set fine colors, and thus it is possible to obtain the operator's desired image.

When the operator selects a target chromaticity value curve from the target chromaticity value curve surface, it is not necessary to use the same first gain and second gain for various target chromaticity values curves, and it is possible to change the first gain or second gain or both gains according to the selected target chromaticity value curve.

(Twelfth Embodiment)

The twelfth to the fourteenth embodiments make the ninth to the eleventh embodiments possible by using software. It is possible to use the CPU system explained in the fifth embodiment as the CPU system for executing this software.

Fig. 39 is a flowchart of the image processing program of the twelfth embodiment of the invention. The image processing program of this twelfth embodiment is a program that enables the processing of the image processing apparatus of the ninth embodiment to be performed by software.

After the image processing program of this invention starts (step 61), first, initial setting is performed in step 62. In the initial setting, first, the target chromaticity value curve data is set. In step 63, the object pixel data of the input image data is read. In the case that the input image data is not expressed by lightness and chromaticity, well known color space conversion is performed to generate the lightness value and chromaticity values. For example, the RGB signal is converted to Y, Cr and Cb signals. In step 64, the input lightness value and target chromaticity value curve of the object pixel are used to generate target chromaticity values. In step 65, the target chromaticity values obtained in step 64, the input lightness value of the object pixel, input chromaticity values of the object pixel, and chromaticity values of the vertices of the triangular areas of the adjustment chromaticity area are used to generate a color adjustment coefficient for performing color adjustment. It is possible to use the internal ratio as the color adjustment coefficient. Details of the color adjustment coefficient generation step 65 are the same as explained in the fifth embodiment. In step 66, a first gain is generated that becomes smaller as the color moves away from a specified lightness value. In step 67, the first gain obtained in step 66 is used to correct the color adjustment coefficient generated in step 65. In step 68, the corrected color adjustment coefficient obtained in step 67 is used to perform color adjustment of the input chromaticity values of the object pixel. In step 69, whether or not color adjustment has been completed for all pixels is checked, and when adjustment has not been completed for all pixels, the process returns to step 63, and when adjustment has been completed for all pixels, the color adjustment process ends (step 70).

(Thirteenth Embodiment)

Fig. 40 is a flowchart of the image processing program of the thirteenth embodiment of the invention. The image processing program of this thirteenth embodiment is a program that enables the processing of the image processing apparatus of the tenth embodiment to be performed by software.

After the image processing program of this invention starts (step 81), first, in step 82, initial setting is performed. In this initial setting, first, target chromaticity value curve data is set. In step 83, the object pixel data of the input image data is read. In the case when the input image data is not expressed by lightness and chromaticity, well known color space conversion is performed to generate a lightness value and chromaticity values. For example, the RGB signal is converted to Y, Cr and Cb signals. In step 84, the input lightness value and target chromaticity value curve of the object pixel are used to generate target chromaticity values. In step 85, the target chromaticity values obtained in step 84, the input lightness value of the object pixel, the input chromaticity values of the object pixel, and the chromaticity values of the vertices of the triangular areas of the adjustment chromaticity area are used to generate a color adjustment coefficient for performing color adjustment. It is possible to use the internal ratio as the color adjustment coefficient. In step 86, the second gain, which becomes smaller the closer to an achromatic color, is generated. In step 87, the second gain obtained in step 86 is used to correct the color adjustment coefficient generated in step 85. In step 88, the corrected color adjustment coefficient obtained in step 87 is used to perform color adjustment of the input chromaticity values of the object pixel. In step 89, whether or not color adjustment has been completed for all pixels is checked, and when adjustment has not been completed for all pixels, the process returns to step 83, and when adjustment has been completed for all pixels, the color adjustment process ends (step 90).

(Fourteenth Embodiment)

Fig. 41 is a flowchart of the image processing program of the fourteenth embodiment of the invention. The image processing program of this fourteenth embodiment is a program that enables the processing of the image processing apparatus of the eleventh embodiment to be performed by software.

After the image processing program of the invention starts (step 101), first, target chromaticity value curve data that was preset in step 102 is used to display a target chromaticity value image that corresponds to each lightness value. The target chromaticity value image can be output to the display apparatus via the input/output port 374. In step 103, based on the displayed target chromaticity value image, the operator selects whether or not to perform color adjustment with this target chromaticity value curve. In the case where color adjustment with this target chromaticity value curve will not be performed, the process advances to step 104 to select (adjust) a target chromaticity value curve. Steps 102 to 104 are repeated, and the operator selects a desired target chromaticity value curve. After the target chromaticity value curve has been selected, initial setting is performed in step 105. In this initial setting, first, target chromaticity value curve data is set. In step 106, the object pixel data of the input image data is read. In the case when the input image data is not expressed by lightness and chromaticity, well known color space conversion is performed to generate a lightness value and chromaticity values. For example, the RGB signal is converted to Y, Cr and Cb signals. In step 107, the input lightness value and target chromaticity value curve of the object pixel are used to generate target chromaticity values. In step 108, the target chromaticity values obtained in step 107, the input lightness value of the object pixel, the input chromaticity values of the object pixel, and the chromaticity values of the vertices of the triangular areas of the adjustment chromaticity area are used to generate a color adjustment coefficient for performing color adjustment. It is possible to use the internal ratio as the color adjustment coefficient. In step 109, a first gain is generated such that it becomes smaller the further away from a specified lightness range. In step 110, a second gain is generated such that it becomes smaller the closer to the achromatic color. In step 111, the first gain obtained in step 109 and the second gain obtained in step 110 are used to correct the color adjustment coefficient that was obtained in step 108. In step 112, the corrected color adjustment coefficient that was obtained in step 111 is used to perform color adjustment of the input chromaticity values of the object pixel. In step 113, whether or not color adjustment has been completed for all pixels is checked, and when adjustment has not been completed for all pixels, the process returns to step 106, and when adjustment has been completed for all pixels, the color adjustment process ends (step 114).

In all of the embodiments, color adjustment of only one color was explained, however, color adjustment is not limited to one color, and it is possible to adjust a plurality of colors.

Also, the target chromaticity value curve surface or target chromaticity value curve was used, however, a collection of target chromaticity values can be used instead.

Moreover, in the case of displaying the target chromaticity value curve, it is not necessary to display an image for all lightness values, and it is possible to display an image for just a specified lightness range or specified lightness values.

Also, in the embodiments, the first corrected color adjustment coefficient was generated using a color adjustment coefficient that was selected according to the input lightness value, however, it is possible to multiply the color adjustment coefficient with a first gain before selection, and then select the obtained first corrected color adjustment coefficient.

Moreover, in the embodiments, the distance on the color plane from the target chromaticity value Cs was used to find the second gain, however, the invention is not limited to this method, and it is possible, for example, to set a second gain that becomes smaller the nearer to the achromatic color, regardless of the target chromaticity value Cs.

Also, in the embodiments described above, the invention was applied to a simple image processing apparatus as a centralized processing system, however the invention is not limited to this, and it is possible, for example, to apply the invention to an image processing system as an image processing system. Of course, by using an image processing program in a distributed processing system, it is also possible to make the distributed processing system function as an image processing system.

The image processing method, image processing apparatus and image processing program of this invention are capable of automatically performing natural color adjustment, and are useful in devices and systems that handle color images such as color printers, color copiers, color televisions, digital still cameras, and the like.

## Claims

1. An image processing method comprising the steps of:

   setting a target chromaticity value line in a three-dimensional color space that is expressed by one lightness value and two chromaticity values;
   finding target chromaticity values using an input lightness value of an input color image signal and the target chromaticity value line; and
   bringing input chromaticity values of the color image signal close to the target chromaticity values.

2. An image processing method of claim 1 further comprising the step of displaying colors of the target chromaticity value line before the step of finding the target chromaticity values using the input lightness value of the input color image signal and the target chromaticity value line.

3. An image processing method of claim 2 further comprising the step of displaying target color image data that are generated using a plurality of lightness values and a plurality of chromaticity values that are found from the lightness values and the target chromaticity value line.

4. An image processing method of claim 1 wherein a collection of target chromaticity values is used instead of the target chromaticity value line.

5. An image processing method of claim 1 wherein the target chromaticity value line is selected from a target chromaticity value surface that is set in the color space.

6. An image processing method of claim 5 wherein a collection of target chromaticity value lines is used instead of the target chromaticity value surface.

7. An image processing method of claim 1 further comprising the steps of
   generating an adjustment chromaticity area by combining a plurality of triangular areas on a chromaticity plane, the plurality of triangular areas all having one vertex at a point corresponding to the target chromaticity values,
   finding a plurality of internal ratios for the input chromaticity values from chromaticity values at intersections of a line connecting the target chromaticity values and the input chromaticity values and lines respectively connecting, of vertexes of each triangular area, vertexes on a periphery of the adjustment chromaticity area and from the target chromaticity values, and
   selecting one from the plurality of internal ratios
   and wherein the step of bringing the input chromaticity values close to the target chromaticity values is performed using the selected internal ratio.

8. An image processing method of claim 7 wherein the adjustment chromaticity area is a convex area.

9. An image processing method of claim 7 wherein the adjustment chromaticity area changes according to the lightness value.

10. An image processing method of claim 7 further comprising the steps of
    finding a minimum internal ratio from the plurality of internal ratios, and
    comparing the minimum internal ration with a first threshold value,
    and wherein the step of selecting one from the plurality of internal ratios is performed by selecting a larger value of the minimum internal ratio and the first threshold value.

11. An image processing method of claim 7 further comprising the step of finding a minimum internal ratio from the plurality of internal ratios,
    and wherein the step of selecting one from the plurality of internal ratios is performed by selecting a first threshold value when the minimum internal ratio is less than the first threshold value, a second threshold value when the minimum internal ratio is greater than the second threshold value set more greatly than the first threshold value, and the minimum internal ratio when the minimum internal ratio is not less than the first threshold value but no more than the second threshold value.

12. An image processing method of claim 1 wherein a plurality of the target chromaticity value lines are set for specified image color data.

13. An image processing method of claim 1 wherein adjusted chromaticity values obtained when the input chromaticity values of the color image signal are brought close to the target chromaticity values are generated by using an adjustment chromaticity area where color adjustment is performed, the target chromaticity values, the input chromaticity values of the color image signal, and at least one of a first gain which becomes smaller the further away from a specified lightness value range and a second gain which becomes smaller the closer the color image signal is to an achromatic color.

14. An image processing method of claim 13 wherein an operator can correct at least one of the first gain and the second gain.

15. An image processing method of claim 13 wherein the target chromaticity value line is a line that an operator selects from a target chromaticity value surface that is set in the color space, and wherein at least one of the first gain and second gain changes according to the target chromaticity value line selected by the operator.

16. An image processing program for executing the image processing method of claim 1 on a computer.

17. An image processing apparatus comprising:

a target chromaticity value generation unit operable to set a target chromaticity value line inside a three-dimensional color space that is expressed by one lightness value and two chromaticity values, and find target chromaticity values using an input lightness value of an input color image signal and the target chromaticity value line;
a color adjustment coefficient generation unit operable to generate a color adjustment coefficient for performing color adjustment from the target chromaticity values output from the target chromaticity value generation unit; and
a color adjustment unit operable to bring input chromaticity values of the color image signal close to the target chromaticity values using the color adjustment coefficient.

18. An image processing apparatus of claim 17 further comprising a target chromaticity value display unit operable to display target chromaticity value data found from the target chromaticity value line.

19. An image processing apparatus of claim 17 further comprising a target chromaticity value line selection unit operable to set a target chromaticity value surface inside the color space and select a target chromaticity value line in the target chromaticity value surface.

20. An image processing apparatus of claim 17 wherein the color adjustment coefficient generation unit comprises:

an internal ratio calculation unit operable to generate an adjustment chromaticity area by combining a plurality of triangular areas on a chromaticity, the plurality of triangular areas all having one vertex at a point corresponding to the target chromaticity values, and find a plurality of internal ratios for the input chromaticity values from chromaticity values at intersections of a line connecting the target chromaticity values and the input chromaticity values and lines respectively connecting, of vertexes of each triangular area, vertexes on a periphery of the adjustment chromaticity area and from the target chromaticity values;
an internal ratio coefficient generation unit operable to generate coefficients for calculating the internal ratios in the internal ratio calculation unit using the target chromaticity values; and
an internal ratio selection unit operable to select one internal ratio from the plurality of internal ratios output from the internal ratio calculation unit.

21. An image processing apparatus of claim 17 further comprising:

a first gain generation unit operable to generate a first gain that becomes smaller the further away from a specified lightness value range using the input lightness value; and
a first color adjustment coefficient correction unit operable to correct the color adjustment coefficient using the color adjustment coefficient and the first gain,
and wherein the color adjustment unit brings the input chromaticity value close to the target chromaticity values using a first corrected color adjustment coefficient output from the first color adjustment coefficient correction unit.

**22.** An image processing apparatus of claim 17 further comprising:

a second gain generation unit operable to generate a second gain that becomes smaller the closer the color image signal is to an achromatic color using the input chromaticity values of the color image signal; and
a second color adjustment coefficient correction unit operable to use the color adjustment coefficient and the second gain to correct the color adjustment coefficient,
and wherein the color adjustment unit brings the input chromaticity values close to the target chromaticity values using a second corrected color adjustment coefficient output from the second color adjustment coefficient correction unit.

**23.** An image processing apparatus of claim 17 further comprising:

a first gain generation unit operable to generate a first gain that becomes smaller the further away from a specified lightness value range using the input lightness value;
a second gain generation unit operable to generate a second gain that becomes smaller the closer the color image signal is to an achromatic color using the input chromaticity values of the color image signal; and
a third color adjustment coefficient correction unit operable to correct the color adjustment coefficient using the first gain and second gain,
and wherein the color adjustment unit brings the input chromaticity values close to the target chromaticity values using a third corrected color adjustment coefficient output from the third color adjustment coefficient correction unit, the target chromaticity values and the input chromaticity values.

FIG. 1

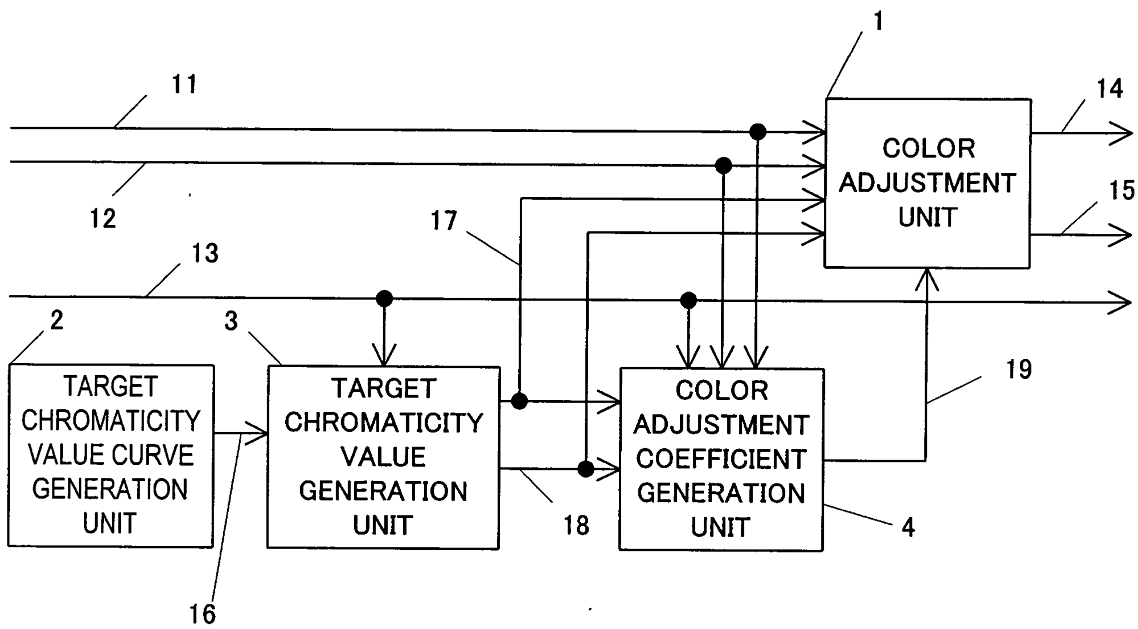
1
11
14
COLOR ADJUSTMENT UNIT
12
15
17
13
2
3
19
TARGET CHROMATICITY VALUE CURVE GENERATION UNIT
TARGET CHROMATICITY VALUE GENERATION UNIT
COLOR ADJUSTMENT COEFFICIENT GENERATION UNIT
18
4
16

FIG. 2

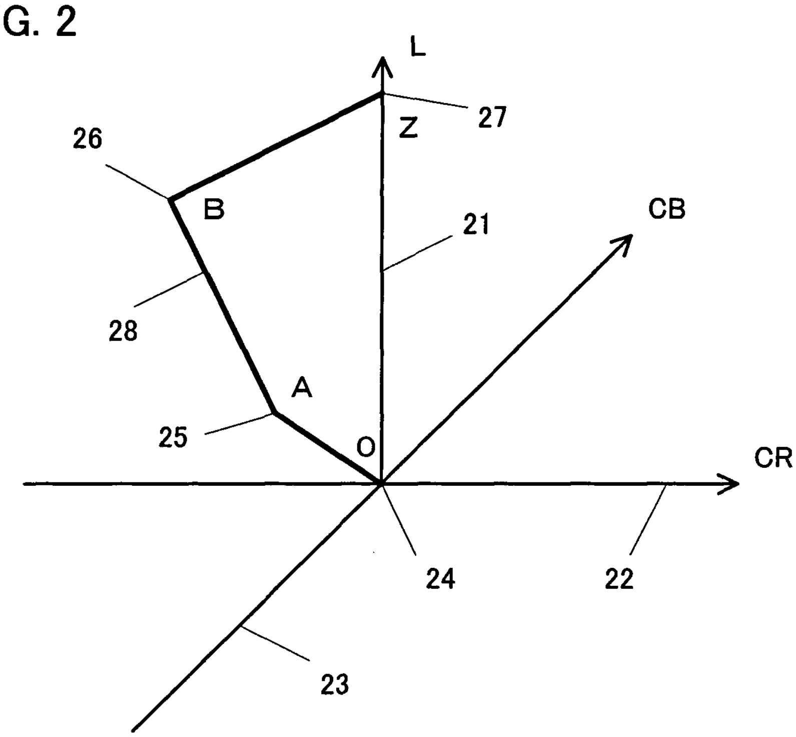
L
27
Z
26
B
21
CB
28
A
25
O
CR
24
22
23

FIG. 3

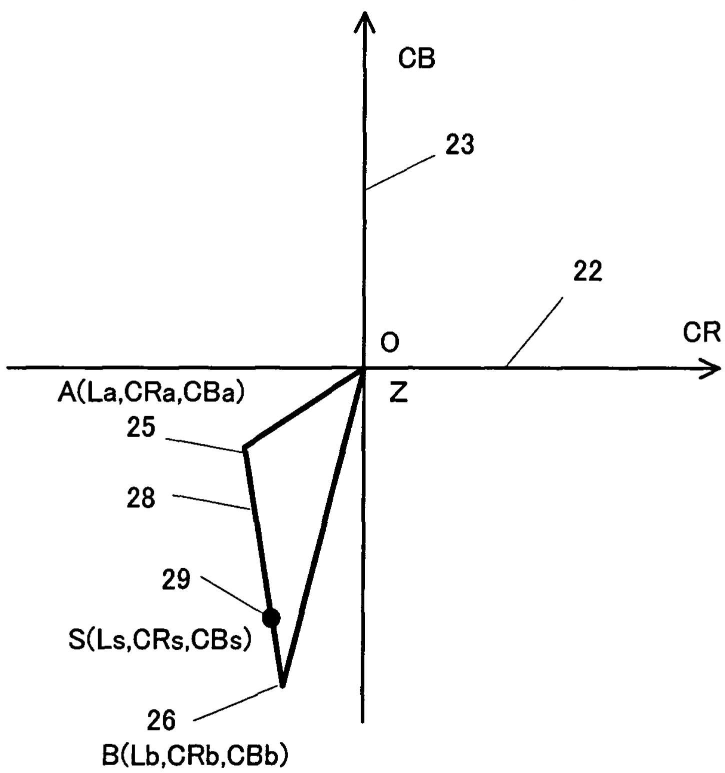
CB
23
22
O
CR
A(La,CRa,CBa)
Z
25
28
29
S(Ls,CRs,CBs)
26
B(Lb,CRb,CBb)

FIG. 4

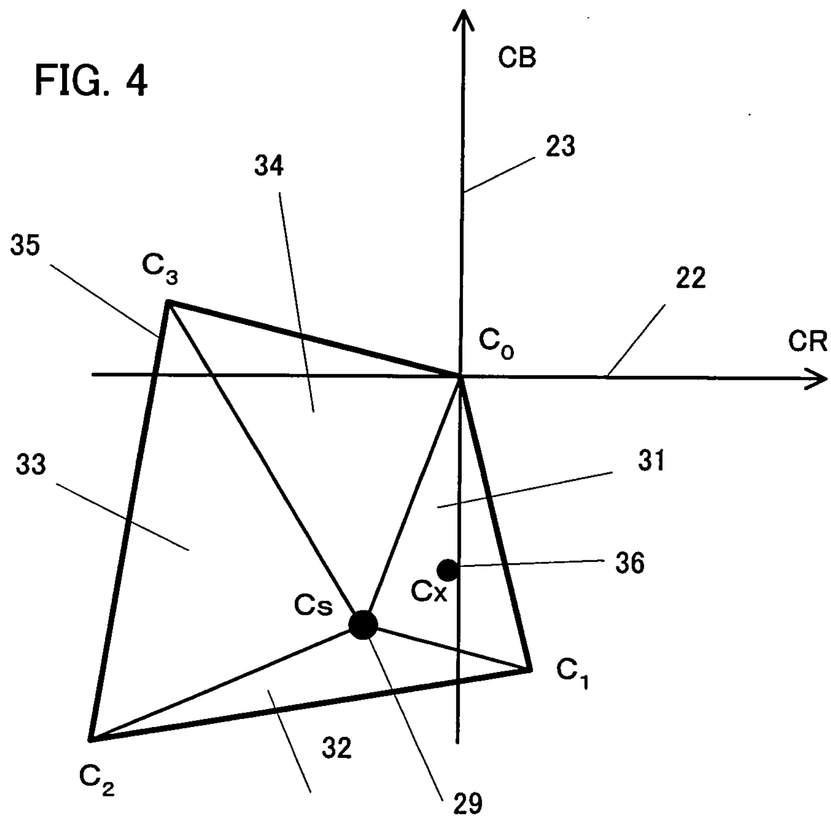
CB
23
34
35
C3
22
C0
CR
33
31
36
Cs
Cx
C1
32
C2
29

FIG. 5

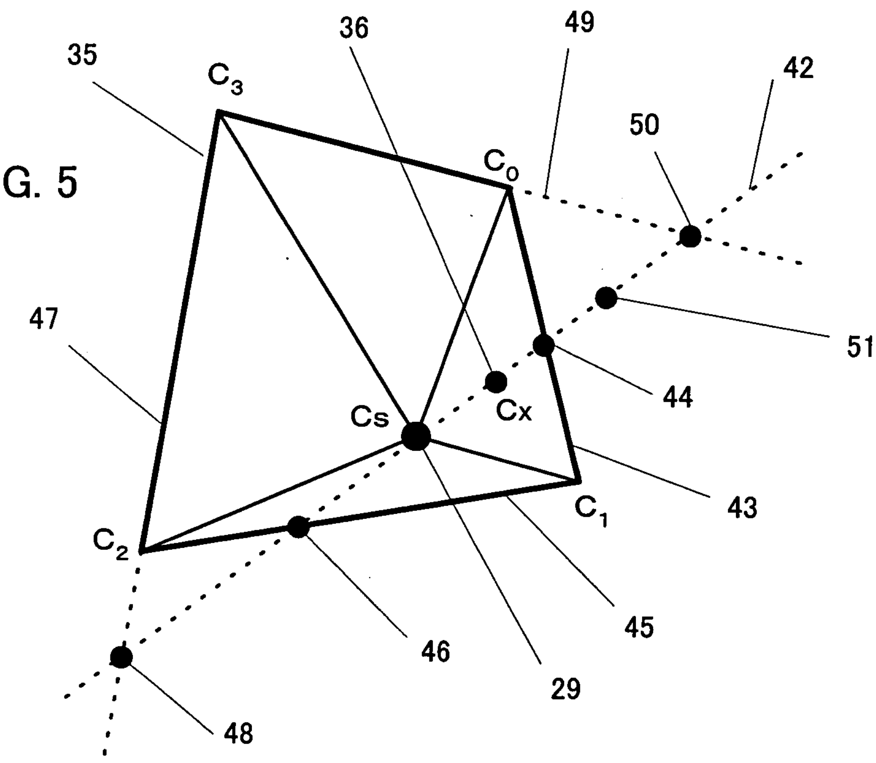
36
49
35
42
C3
50
C0
47
51
44
Cs
Cx
43
C1
C2
45
46
29
48

FIG. 6

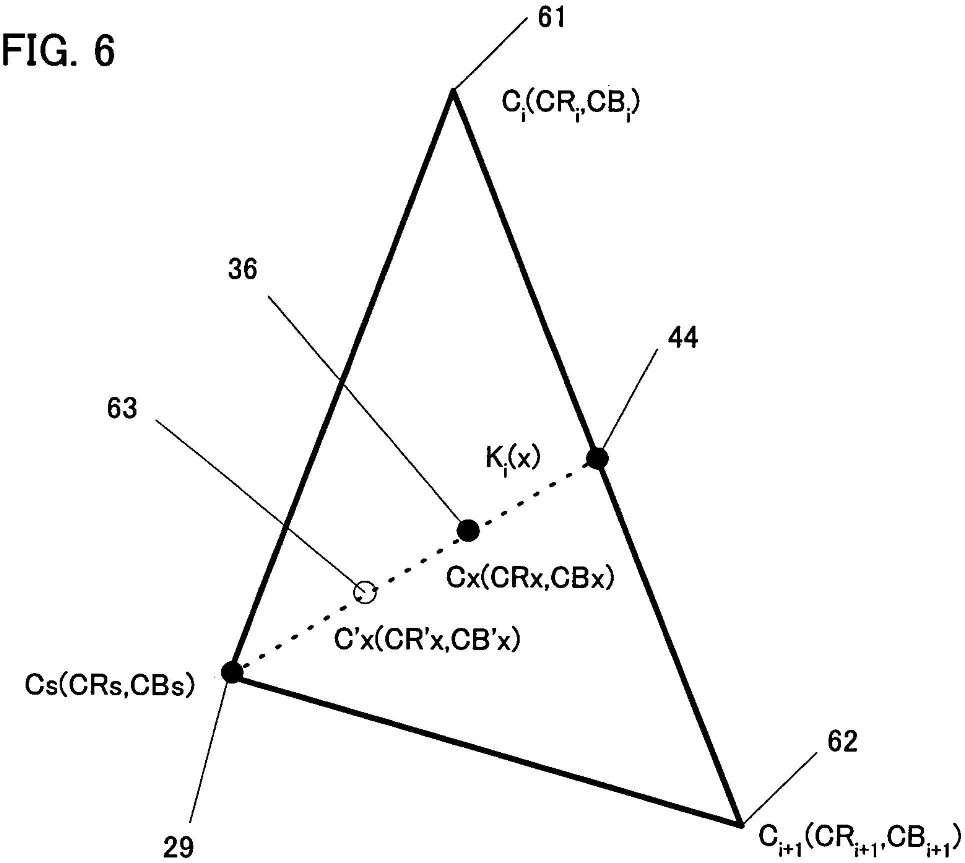
61
$C_i(CR_i,CB_i)$
36
44
63
$K_i(x)$
Cx(CRx,CBx)
C'x(CR'x,CB'x)
Cs(CRs,CBs)
62
29
$C_{i+1}(CR_{i+1},CB_{i+1})$

FIG. 7

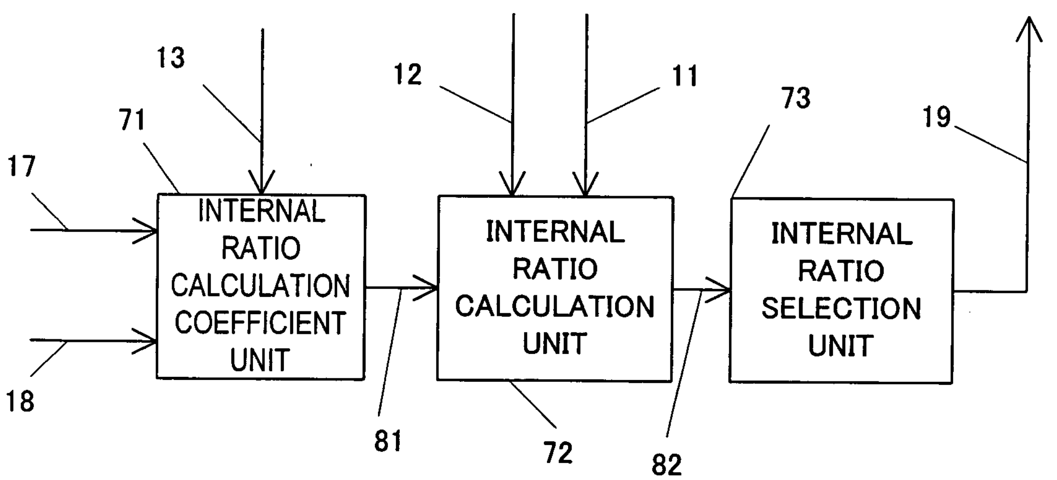
13
12
11
73
19
71
17
INTERNAL RATIO CALCULATION COEFFICIENT UNIT
INTERNAL RATIO CALCULATION UNIT
INTERNAL RATIO SELECTION UNIT
18
81
72
82

FIG. 8

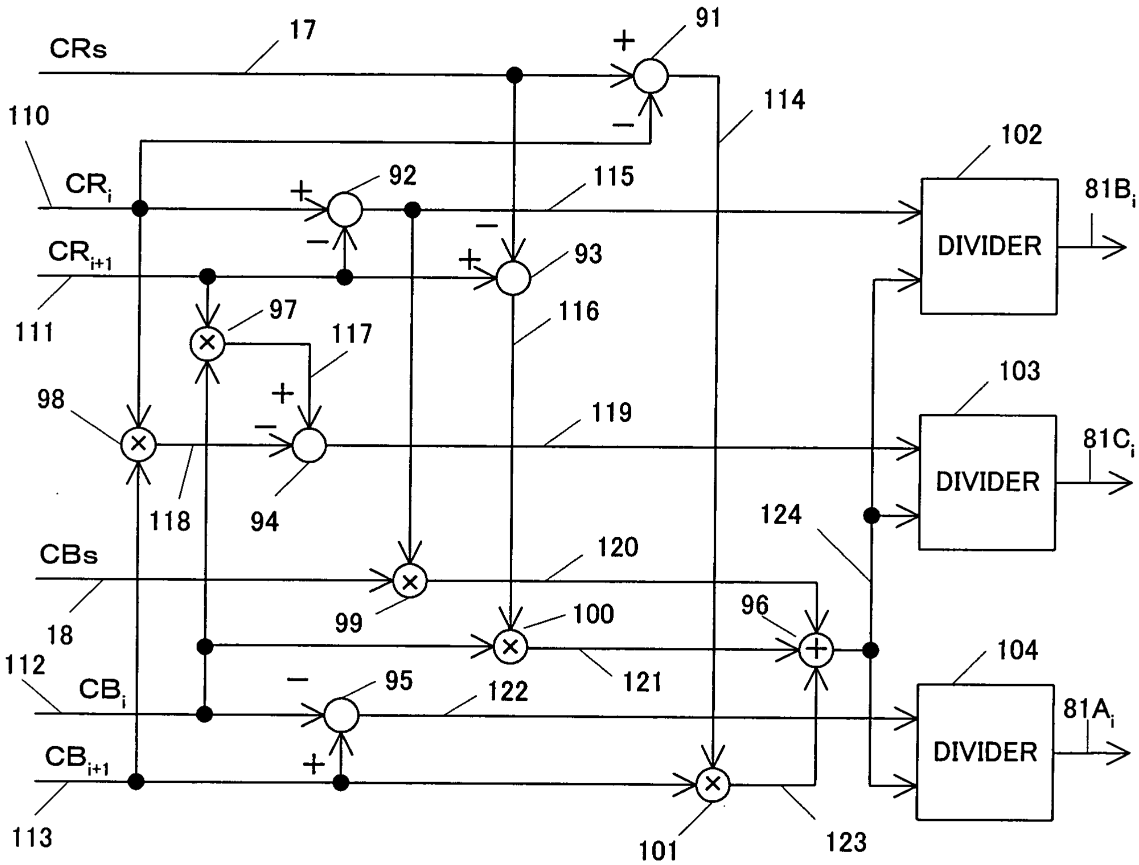
CRs
17
91
+
−
114
110
CRi
+
92
115
−
102
DIVIDER
81Bi
CRi+1
−
+
93
111
97
116
117
+
98
−
119
103
DIVIDER
81Ci
118
94
124
CBs
120
18
99
100
96
112
CBi
−
95
122
121
104
DIVIDER
81Ai
CBi+1
+
113
101
123

FIG. 9

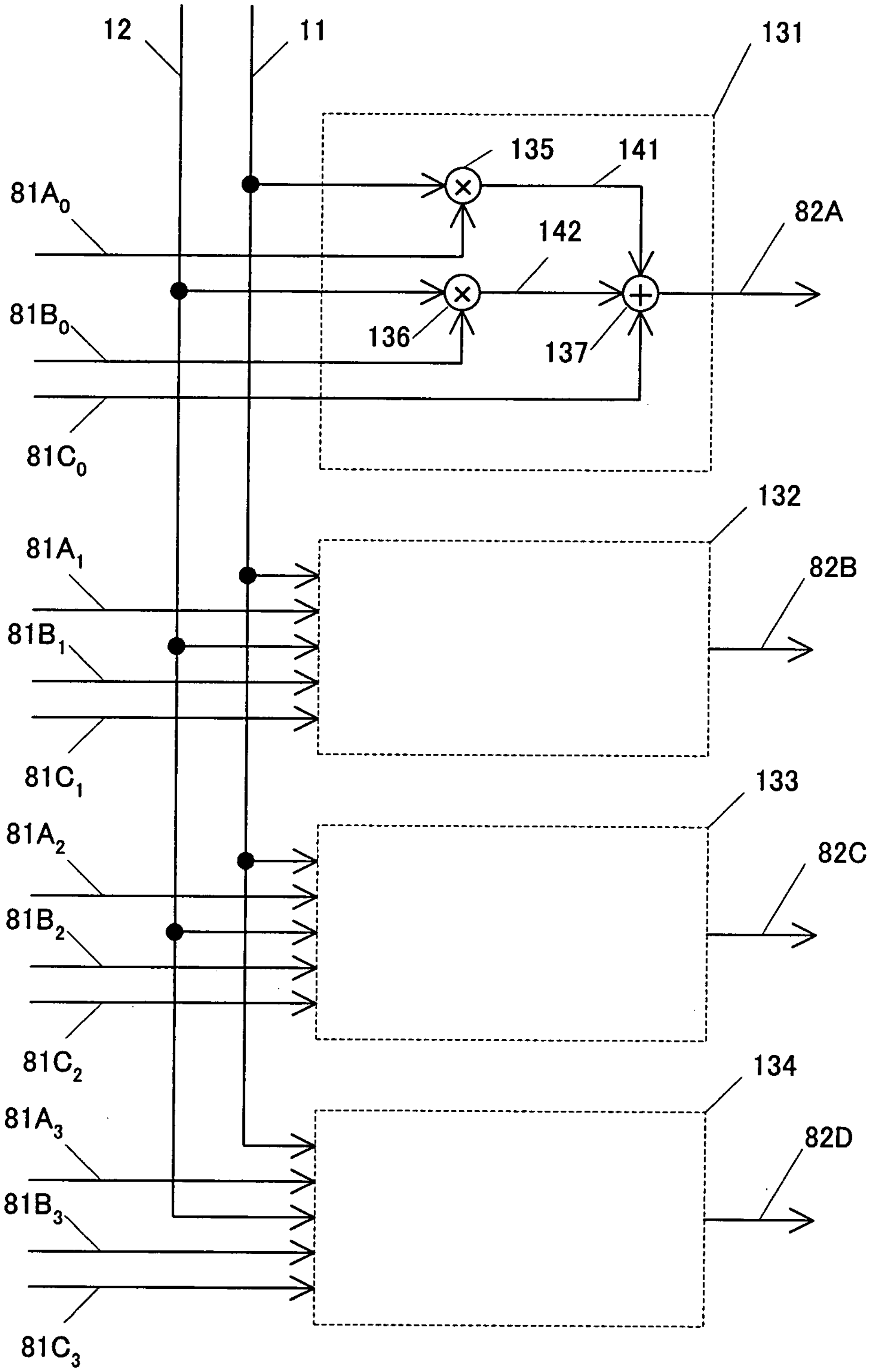
12
11
131
135
141
81A0
82A
142
81B0
136
137
81C0
132
81A1
82B
81B1
81C1
133
81A2
82C
81B2
81C2
134
81A3
82D
81B3
81C3

FIG. 10

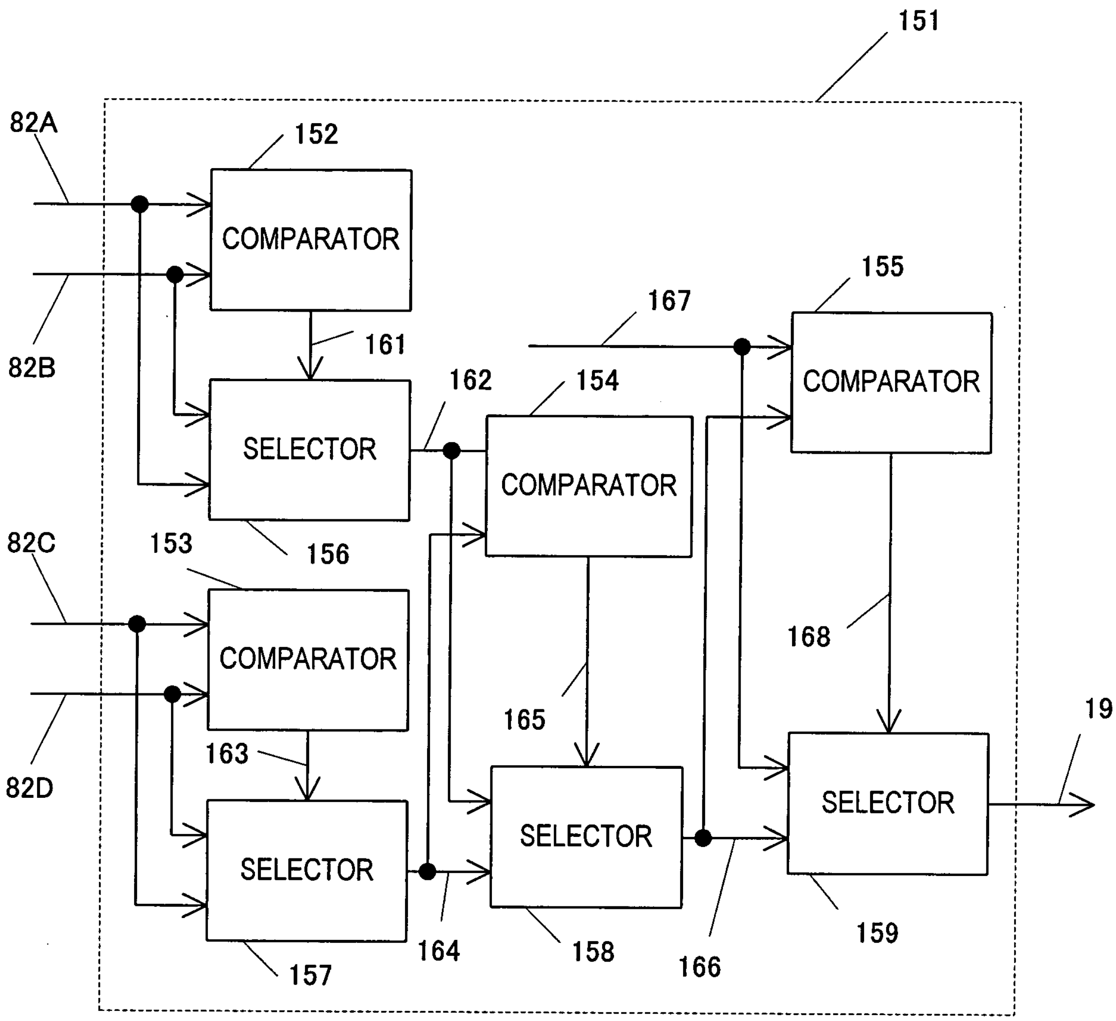
151
82A
152
COMPARATOR
82B
161
SELECTOR
162
154
COMPARATOR
167
155
COMPARATOR
156
82C
153
COMPARATOR
82D
163
SELECTOR
164
157
165
SELECTOR
158
166
168
SELECTOR
159
19

FIG. 11

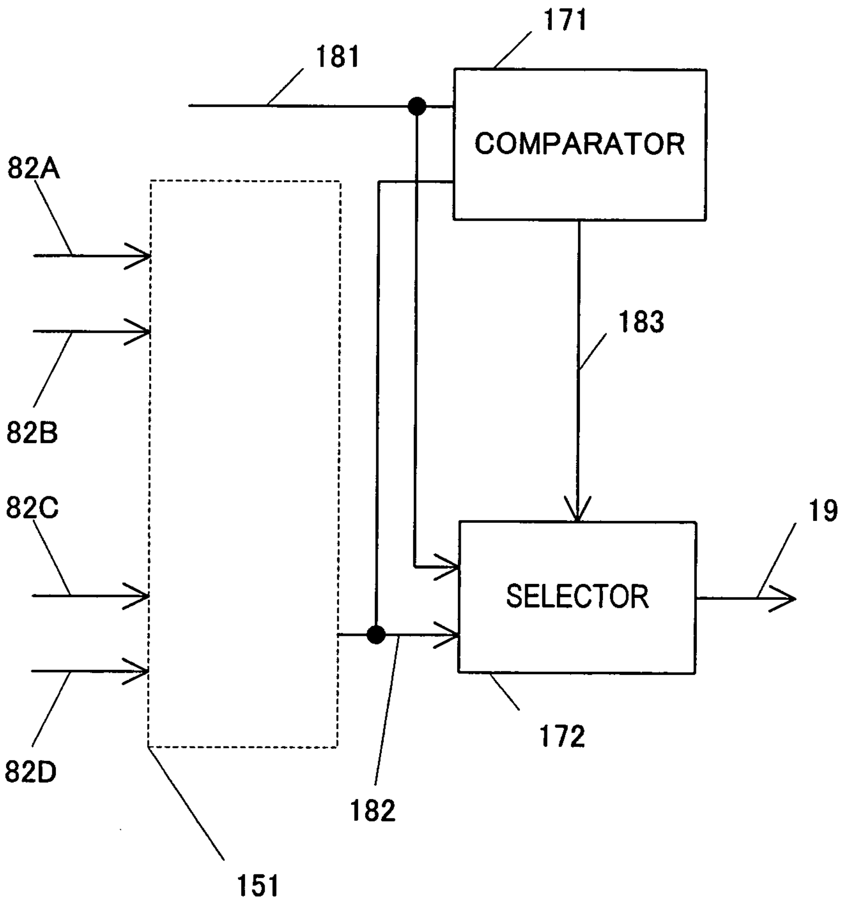
171
181
COMPARATOR
82A
183
82B
82C
19
SELECTOR
172
82D
182
151

FIG. 12

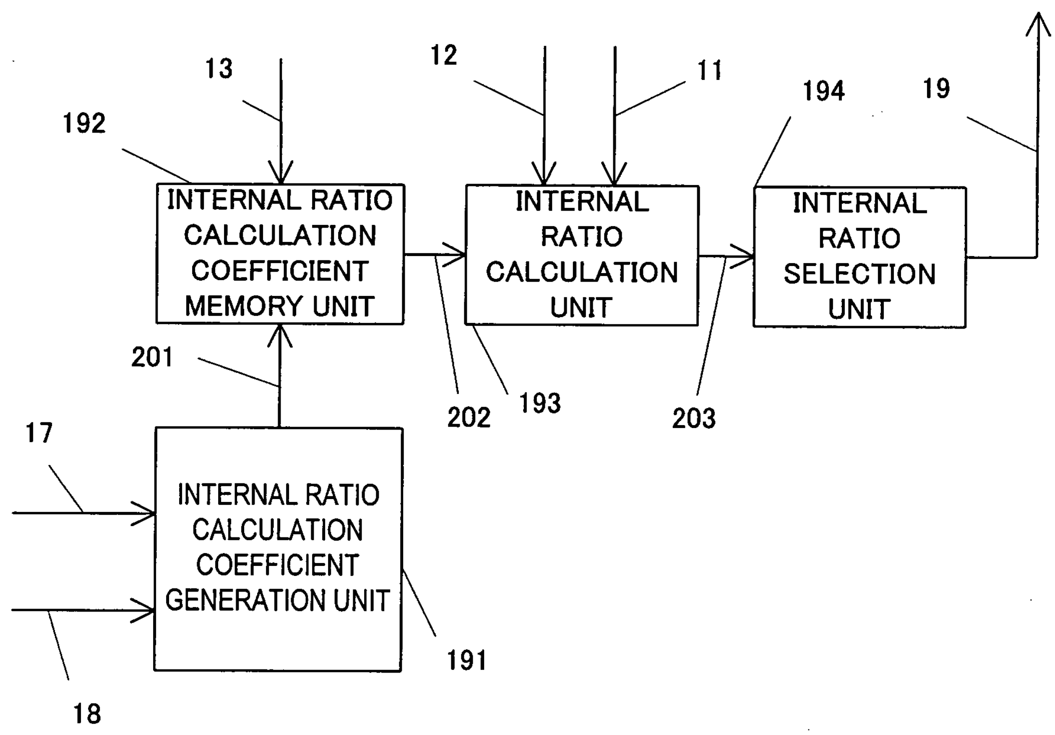
13
12
11
192
194
19
INTERNAL RATIO CALCULATION COEFFICIENT MEMORY UNIT
INTERNAL RATIO CALCULATION UNIT
INTERNAL RATIO SELECTION UNIT
201
202
193
203
17
INTERNAL RATIO CALCULATION COEFFICIENT GENERATION UNIT
191
18

FIG. 13

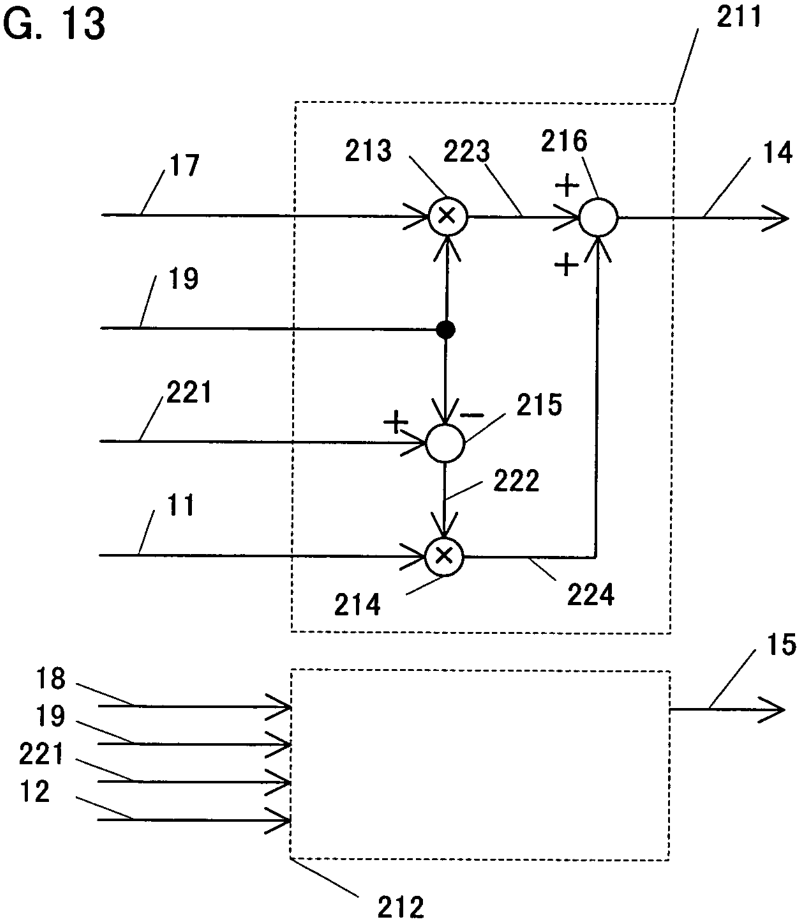

FIG. 14

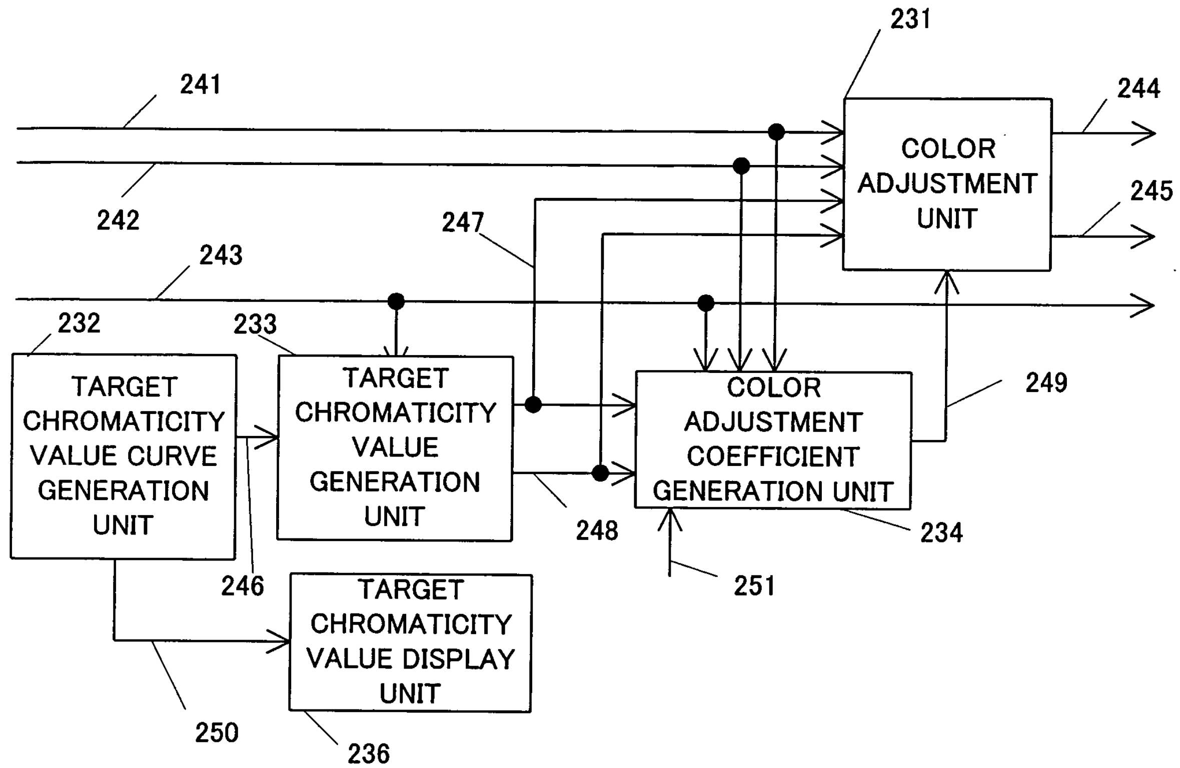
231
241
244
COLOR ADJUSTMENT UNIT
242
245
247
243
232
233
TARGET CHROMATICITY VALUE CURVE GENERATION UNIT
TARGET CHROMATICITY VALUE GENERATION UNIT
COLOR ADJUSTMENT COEFFICIENT GENERATION UNIT
249
248
234
246
251
TARGET CHROMATICITY VALUE DISPLAY UNIT
250
236

FIG. 15

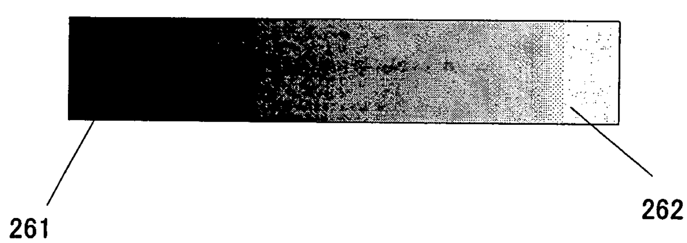
261
262

FIG. 16

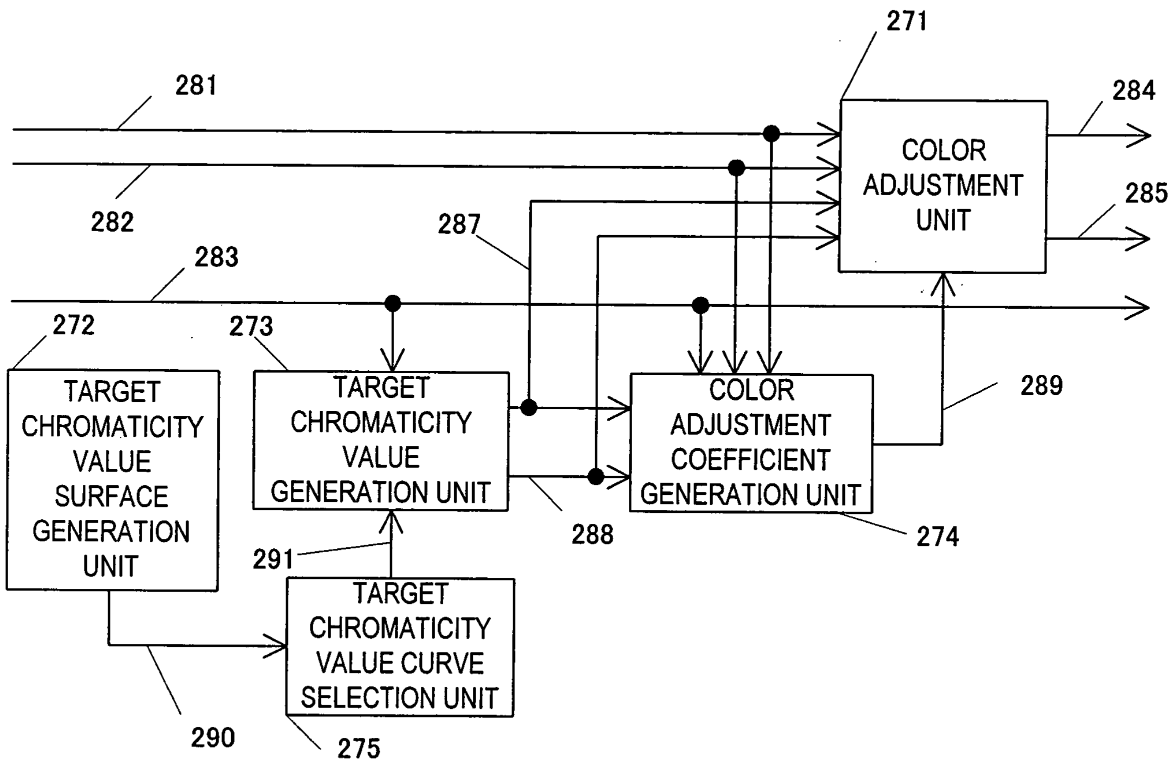
271
281
284
COLOR
ADJUSTMENT
UNIT
282
287
285
283
272
273
TARGET
CHROMATICITY
VALUE
SURFACE
GENERATION
UNIT
TARGET
CHROMATICITY
VALUE
GENERATION UNIT
COLOR
ADJUSTMENT
COEFFICIENT
GENERATION UNIT
289
288
274
291
TARGET
CHROMATICITY
VALUE CURVE
SELECTION UNIT
290
275

FIG. 17

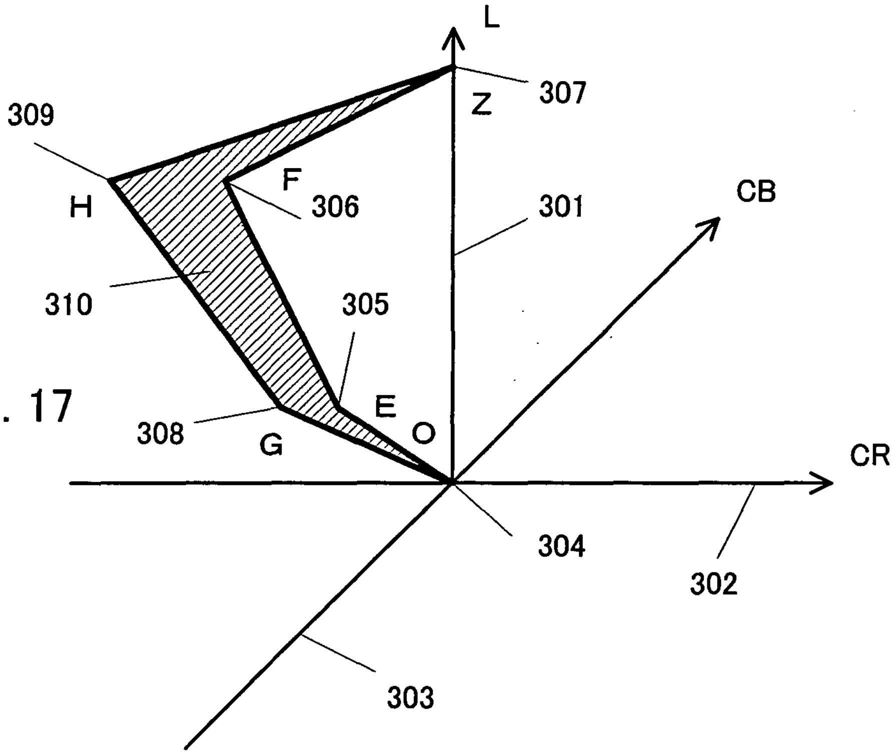
L
307
Z
309
F
H
306
301
CB
310
305
E
308
G
O
CR
304
302
303

FIG. 18

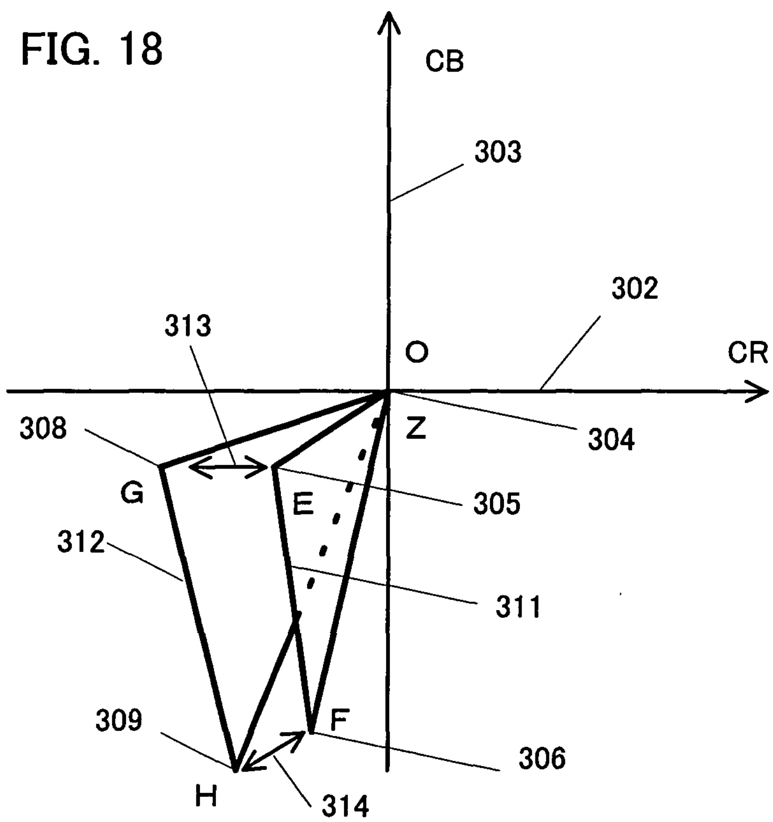
CB
303
302
313
O
CR
308
Z
304
G
E
305
312
311
309
F
306
H
314

FIG. 19

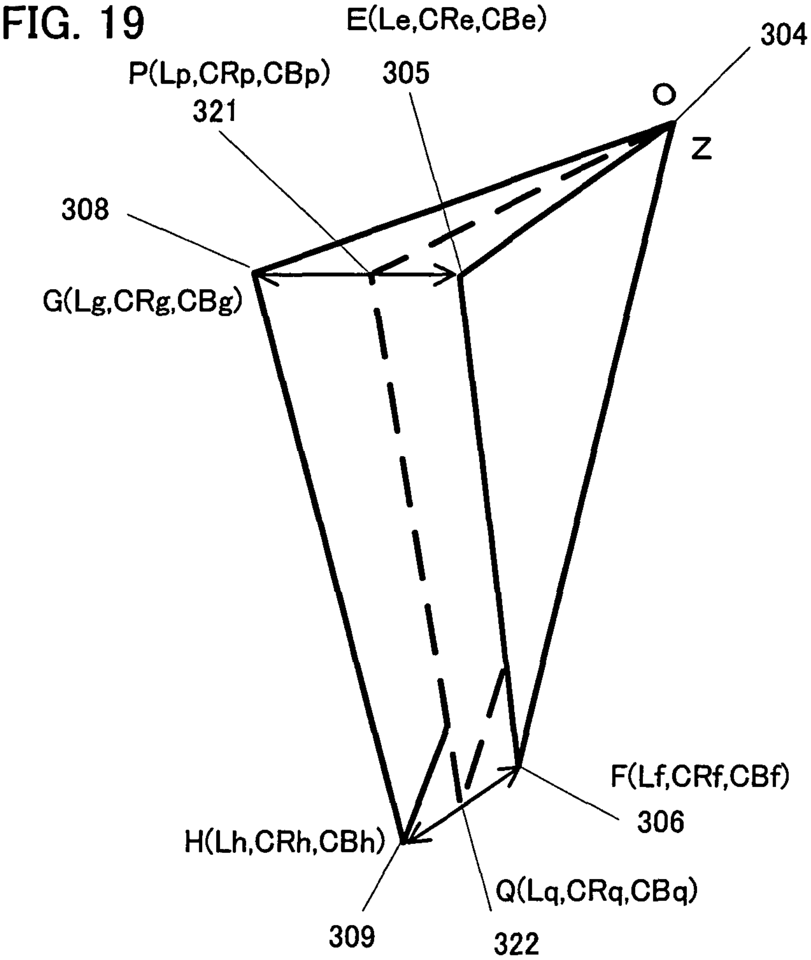
E(Le,CRe,CBe)
304
P(Lp,CRp,CBp)
305
321
O
Z
308
G(Lg,CRg,CBg)
F(Lf,CRf,CBf)
306
H(Lh,CRh,CBh)
Q(Lq,CRq,CBq)
309
322

FIG. 20

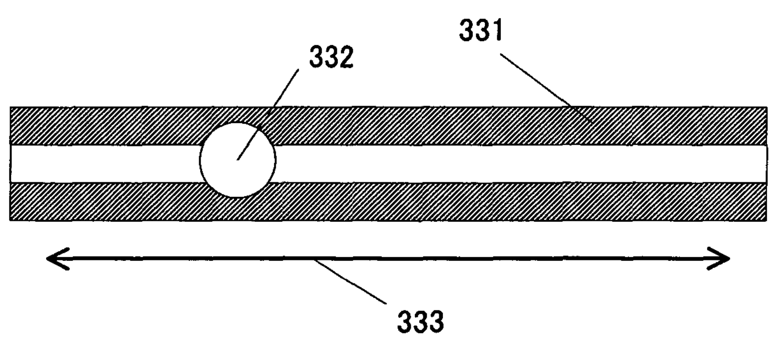
331
332
333

FIG. 21

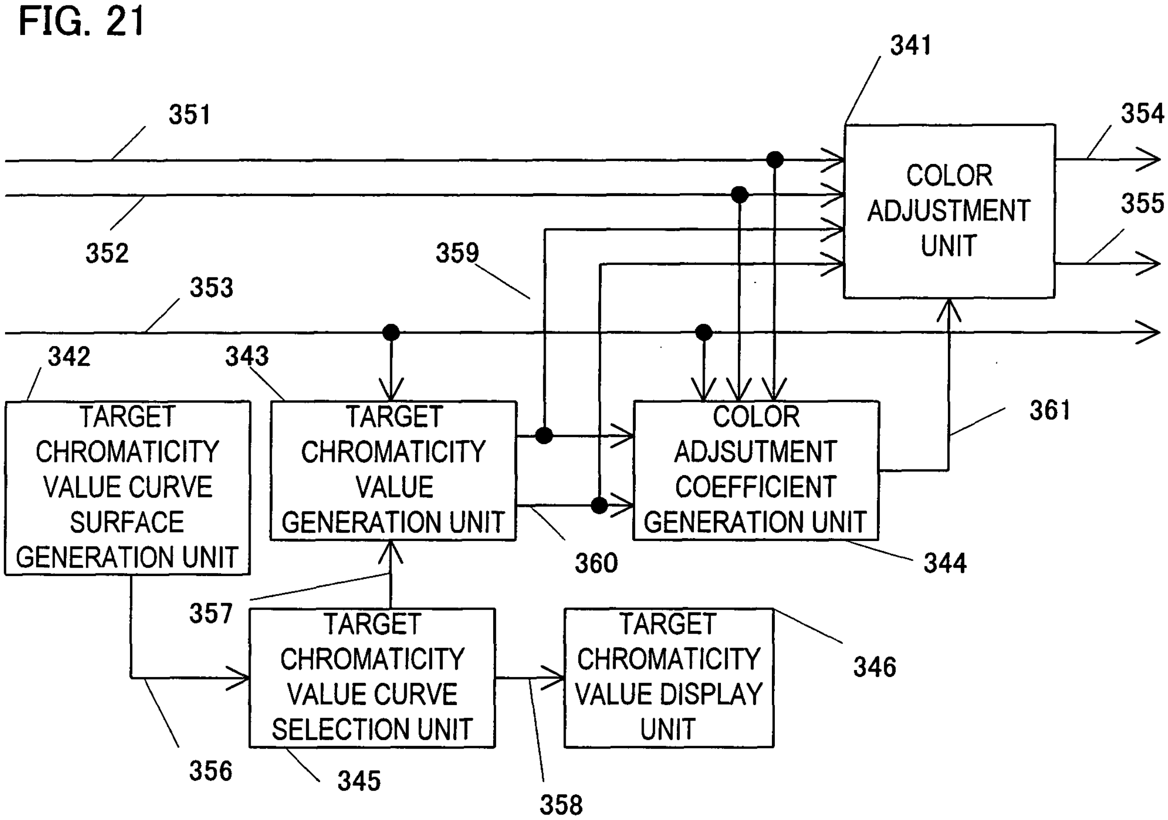
341
351
354
COLOR
ADJUSTMENT
UNIT
355
352
359
353
342
343
TARGET
CHROMATICITY
VALUE CURVE
SURFACE
GENERATION UNIT
TARGET
CHROMATICITY
VALUE
GENERATION UNIT
COLOR
ADJSUTMENT
COEFFICIENT
GENERATION UNIT
361
360
344
357
TARGET
CHROMATICITY
VALUE CURVE
SELECTION UNIT
TARGET
CHROMATICITY
VALUE DISPLAY
UNIT
346
356
345
358

FIG. 22

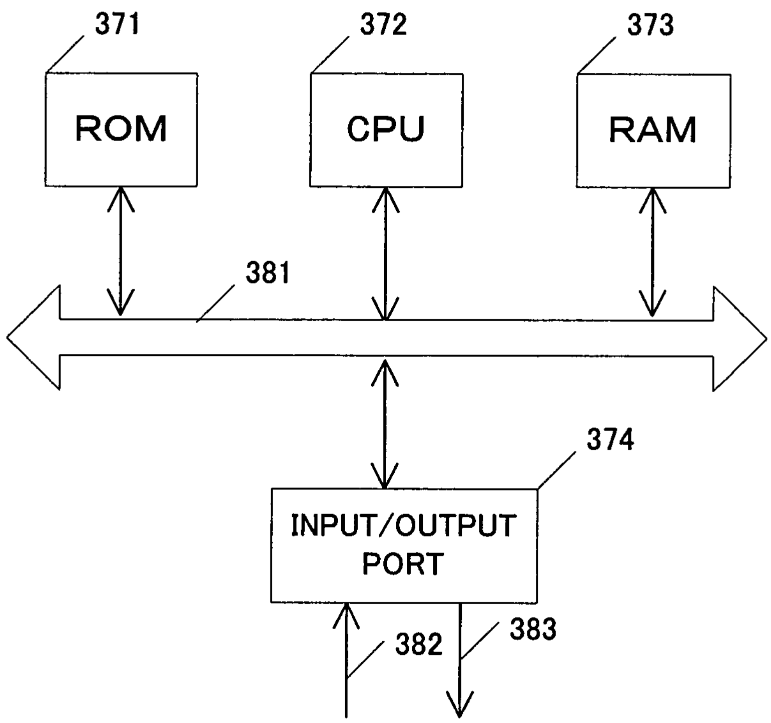

FIG. 23

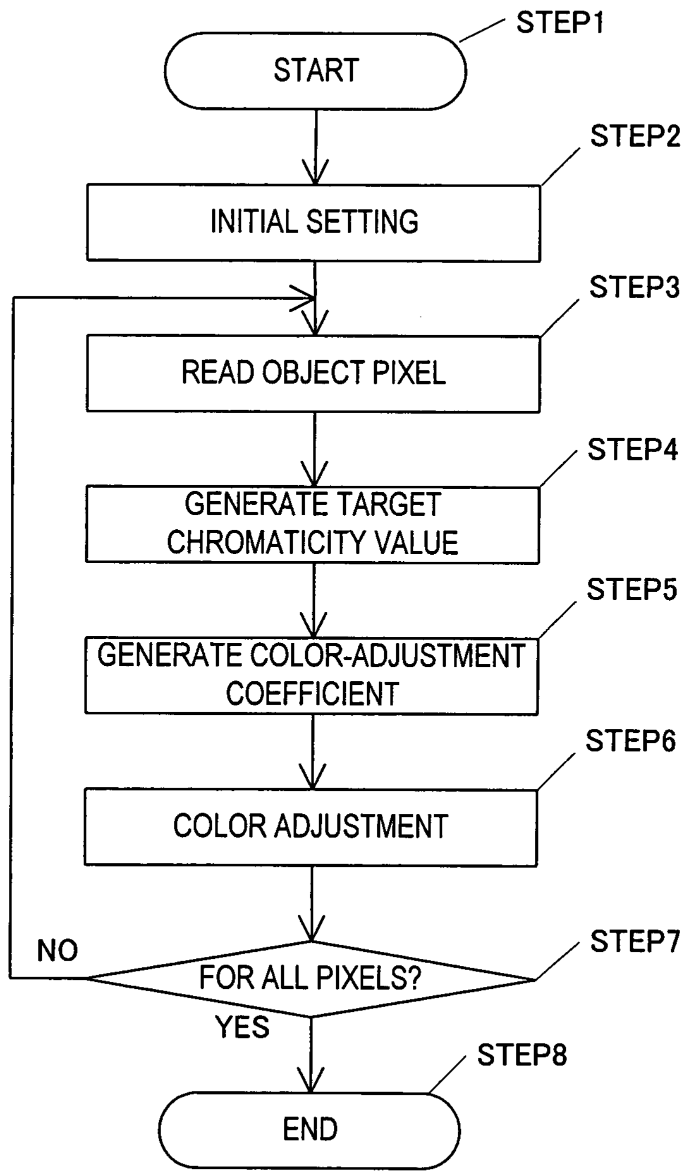
STEP1
START
STEP2
INITIAL SETTING
STEP3
READ OBJECT PIXEL
STEP4
GENERATE TARGET CHROMATICITY VALUE
STEP5
GENERATE COLOR-ADJUSTMENT COEFFICIENT
STEP6
COLOR ADJUSTMENT
STEP7
NO
FOR ALL PIXELS?
YES
STEP8
END

FIG. 24

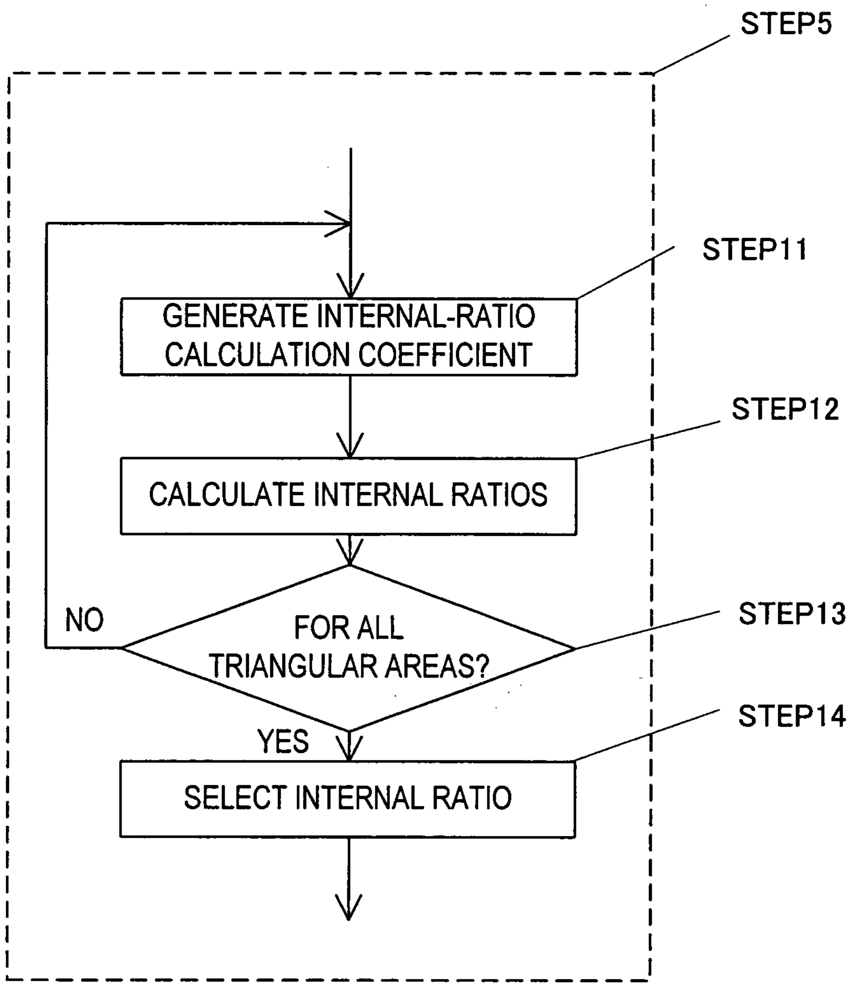
STEP5
STEP11
GENERATE INTERNAL-RATIO CALCULATION COEFFICIENT
STEP12
CALCULATE INTERNAL RATIOS
NO
FOR ALL TRIANGULAR AREAS?
STEP13
YES
STEP14
SELECT INTERNAL RATIO

FIG. 25

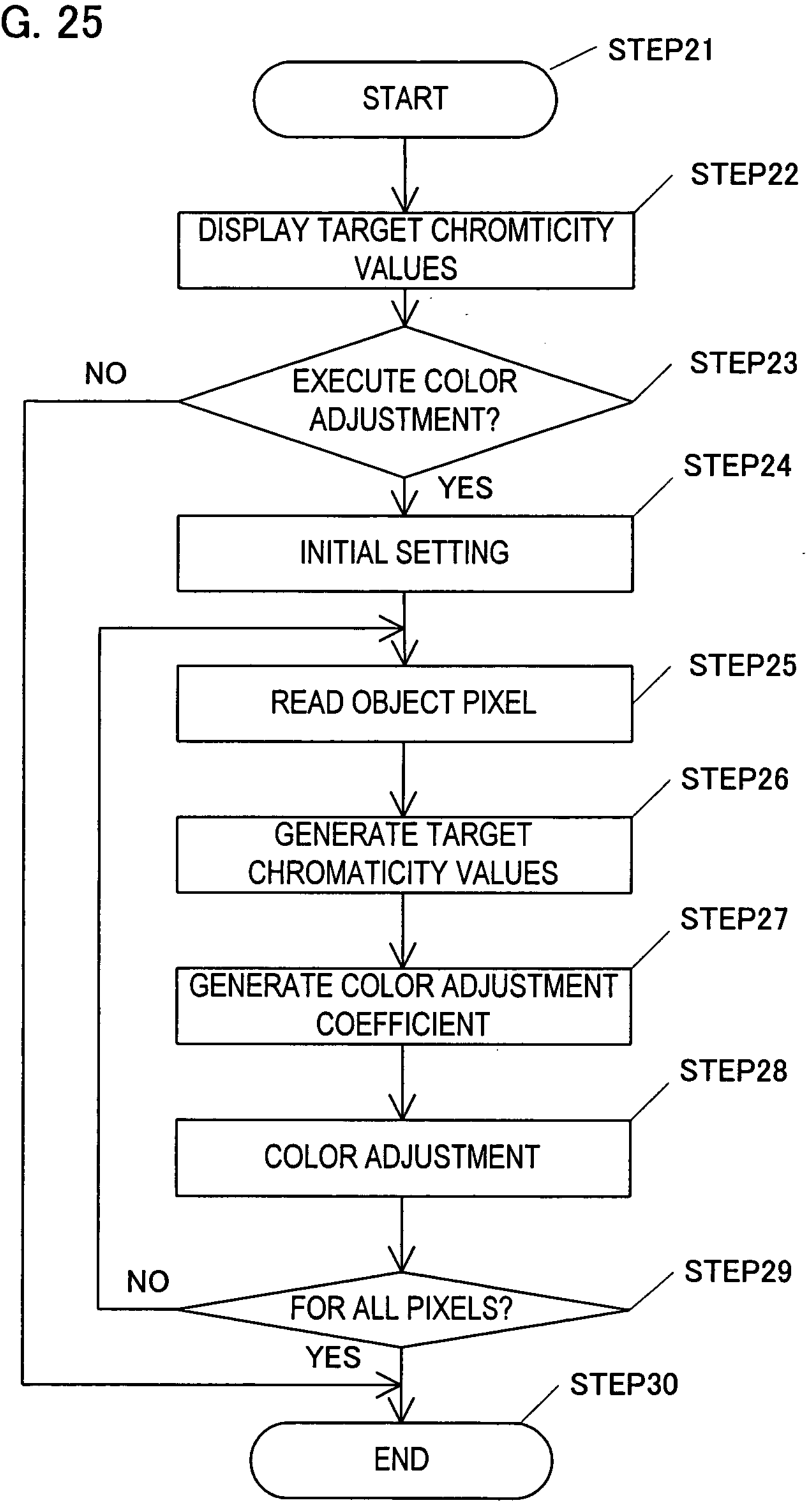
STEP21
START
STEP22
DISPLAY TARGET CHROMTICITY VALUES
STEP23
EXECUTE COLOR ADJUSTMENT?
NO
YES
STEP24
INITIAL SETTING
STEP25
READ OBJECT PIXEL
STEP26
GENERATE TARGET CHROMATICITY VALUES
STEP27
GENERATE COLOR ADJUSTMENT COEFFICIENT
STEP28
COLOR ADJUSTMENT
STEP29
FOR ALL PIXELS?
NO
YES
STEP30
END

FIG. 26

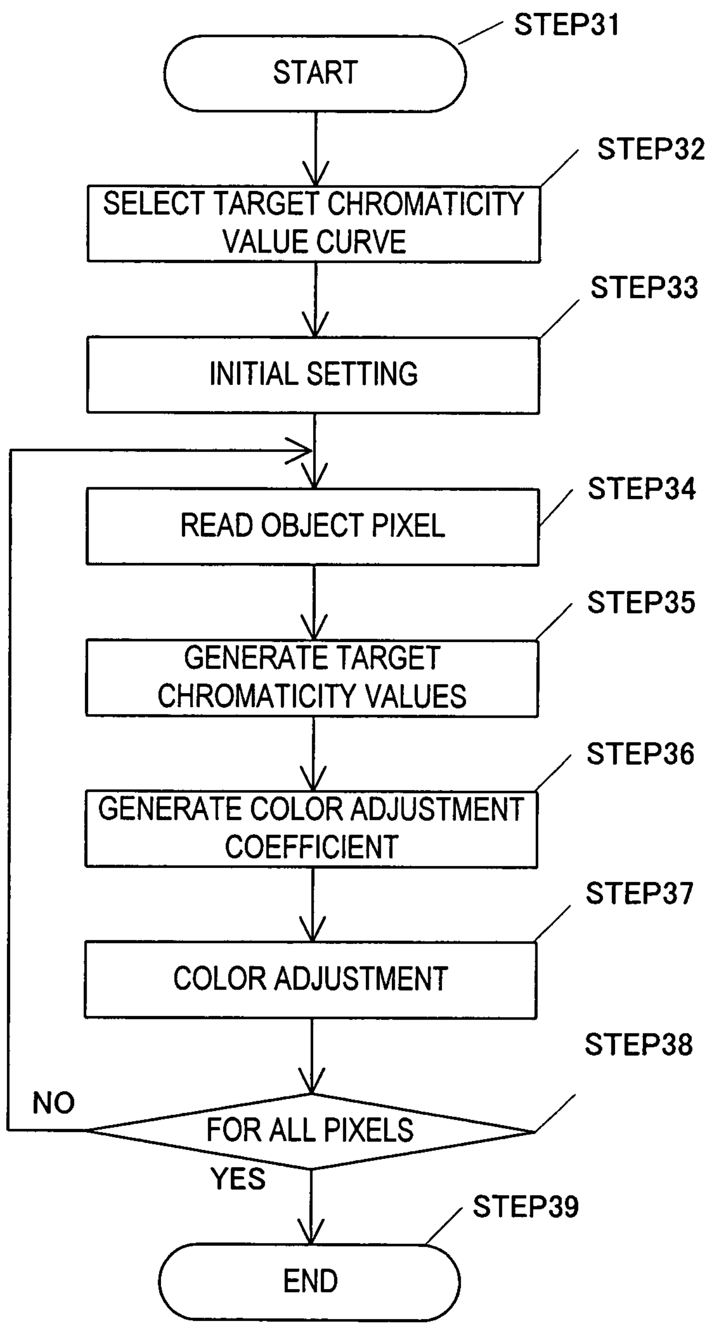
STEP31
START
STEP32
SELECT TARGET CHROMATICITY VALUE CURVE
STEP33
INITIAL SETTING
STEP34
READ OBJECT PIXEL
STEP35
GENERATE TARGET CHROMATICITY VALUES
STEP36
GENERATE COLOR ADJUSTMENT COEFFICIENT
STEP37
COLOR ADJUSTMENT
STEP38
NO
FOR ALL PIXELS
YES
STEP39
END

FIG. 27

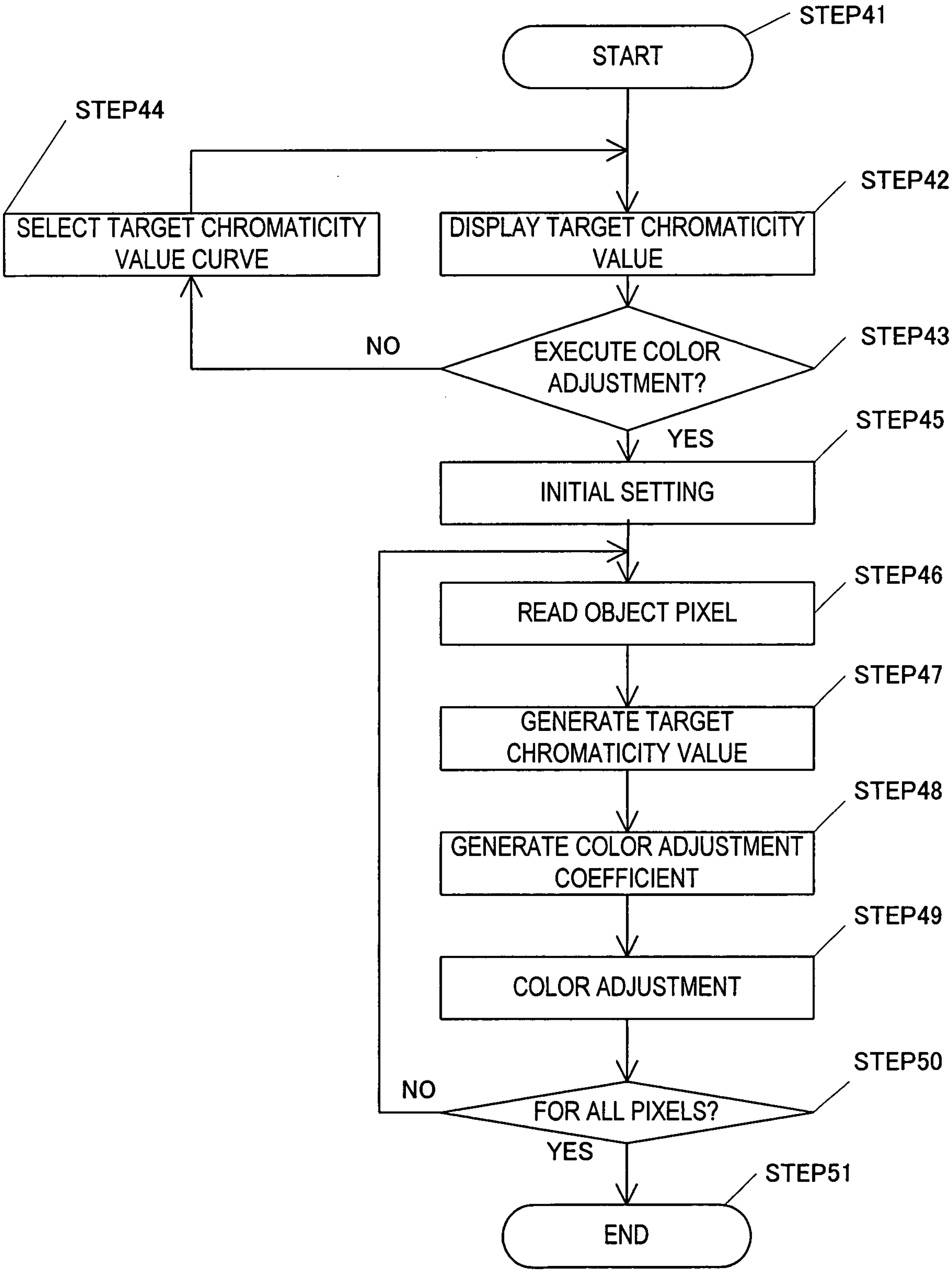
START
STEP41
STEP44
SELECT TARGET CHROMATICITY VALUE CURVE
DISPLAY TARGET CHROMATICITY VALUE
STEP42
NO
EXECUTE COLOR ADJUSTMENT?
STEP43
YES
STEP45
INITIAL SETTING
READ OBJECT PIXEL
STEP46
GENERATE TARGET CHROMATICITY VALUE
STEP47
GENERATE COLOR ADJUSTMENT COEFFICIENT
STEP48
COLOR ADJUSTMENT
STEP49
NO
FOR ALL PIXELS?
STEP50
YES
STEP51
END

FIG. 28

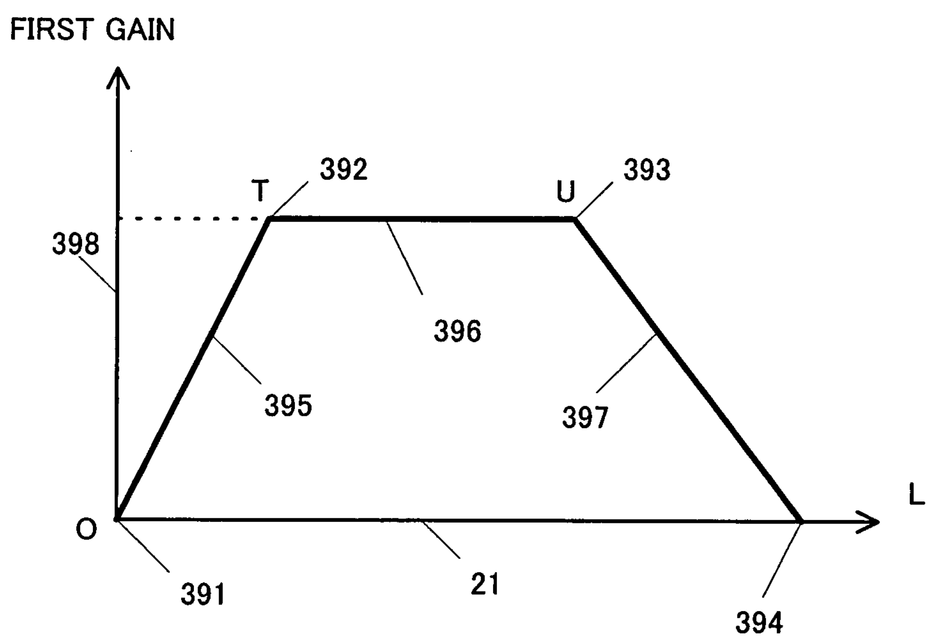

FIG. 29

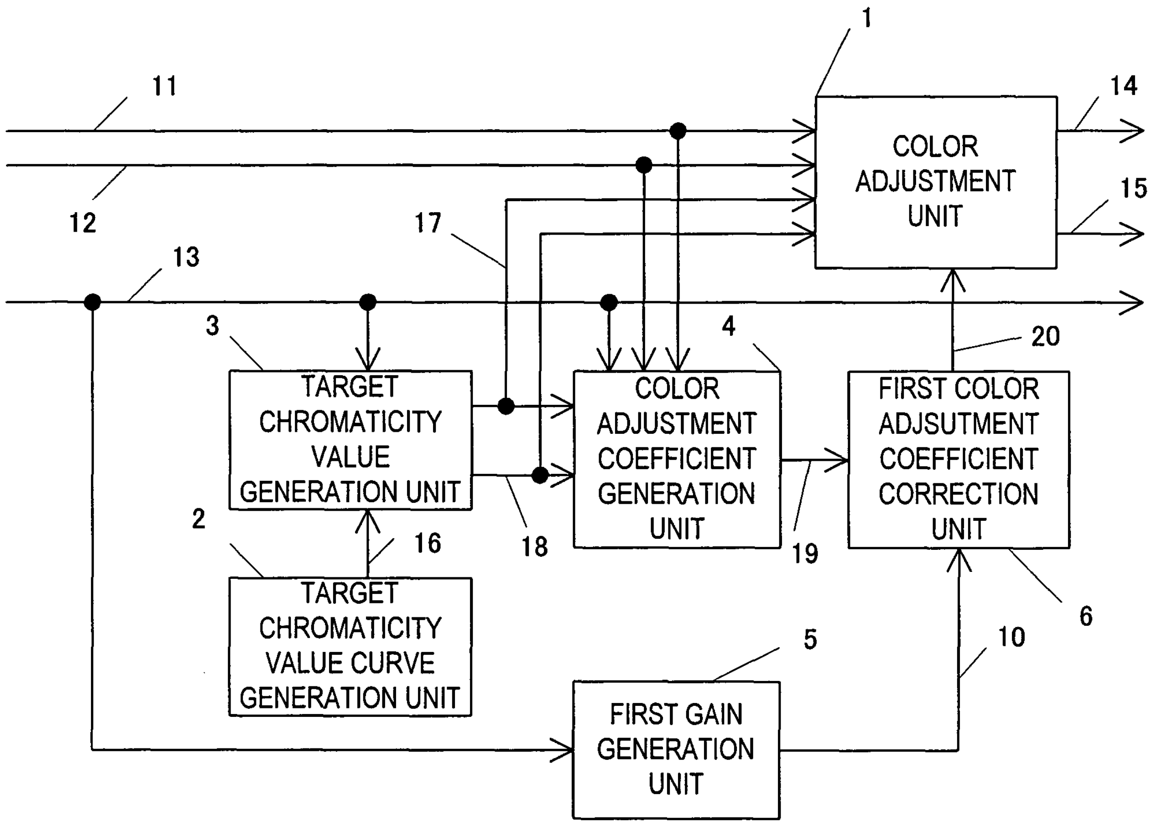
1
11
14
COLOR ADJUSTMENT UNIT
12
17
15
13
3
4
20
TARGET CHROMATICITY VALUE GENERATION UNIT
COLOR ADJUSTMENT COEFFICIENT GENERATION UNIT
FIRST COLOR ADJSUTMENT COEFFICIENT CORRECTION UNIT
2
16
18
19
TARGET CHROMATICITY VALUE CURVE GENERATION UNIT
6
5
10
FIRST GAIN GENERATION UNIT

FIG. 30

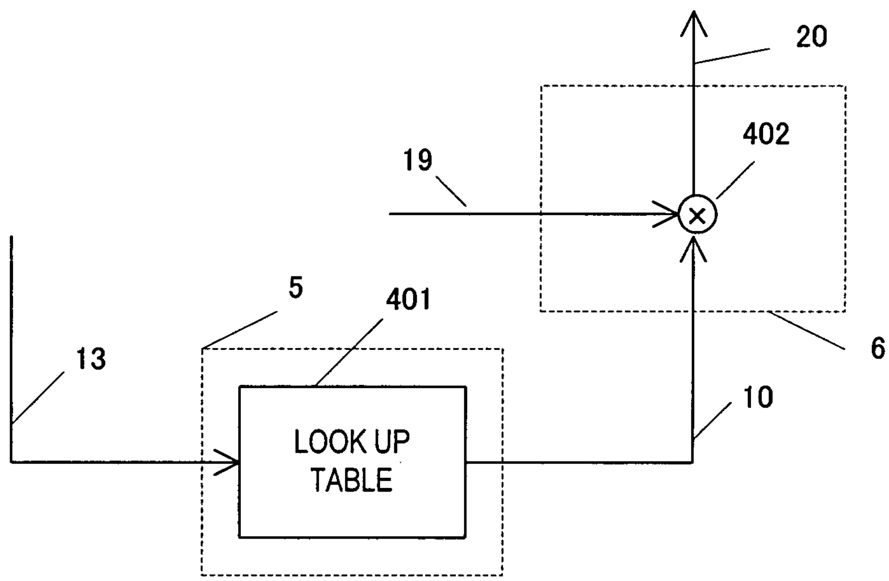

FIG. 31

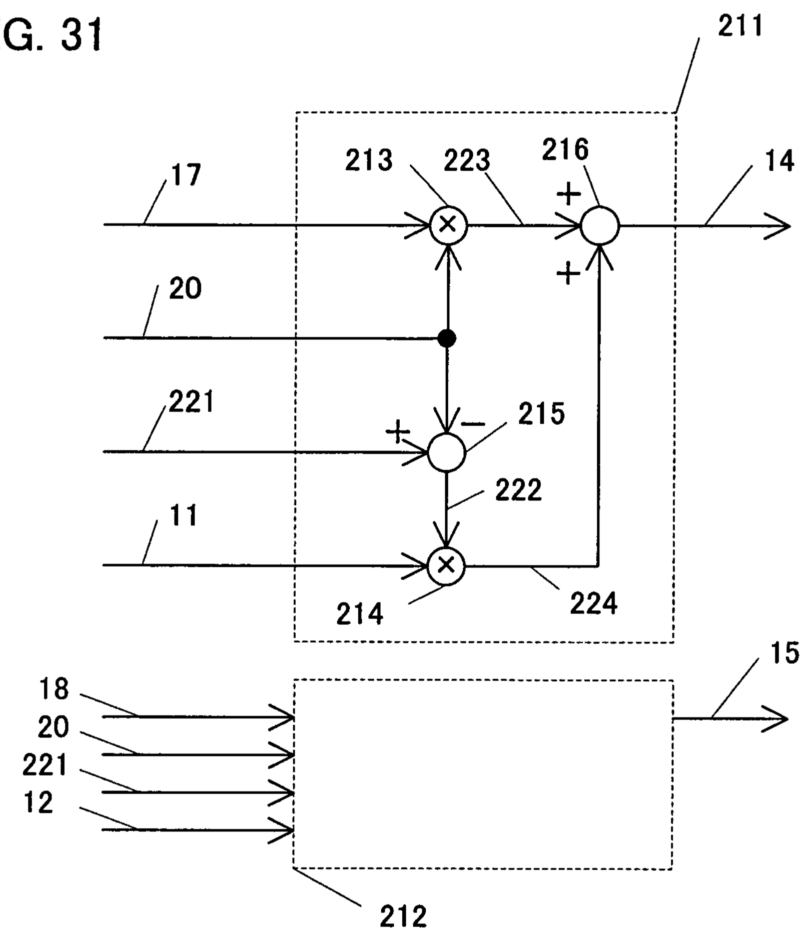

FIG. 32

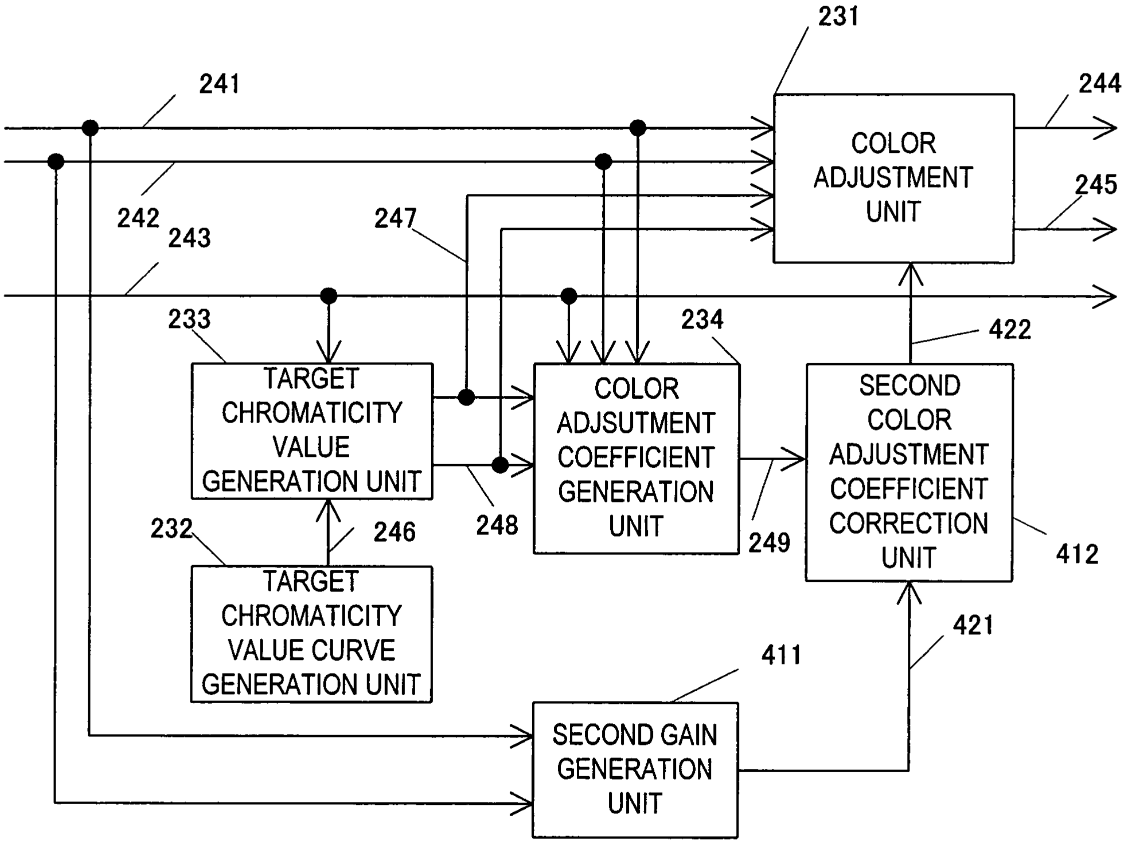
231
241
244
COLOR ADJUSTMENT UNIT
245
242
243
247
233
234
422
TARGET CHROMATICITY VALUE GENERATION UNIT
COLOR ADJSUTMENT COEFFICIENT GENERATION UNIT
SECOND COLOR ADJUSTMENT COEFFICIENT CORRECTION UNIT
232
246
248
249
412
TARGET CHROMATICITY VALUE CURVE GENERATION UNIT
421
411
SECOND GAIN GENERATION UNIT

FIG. 33

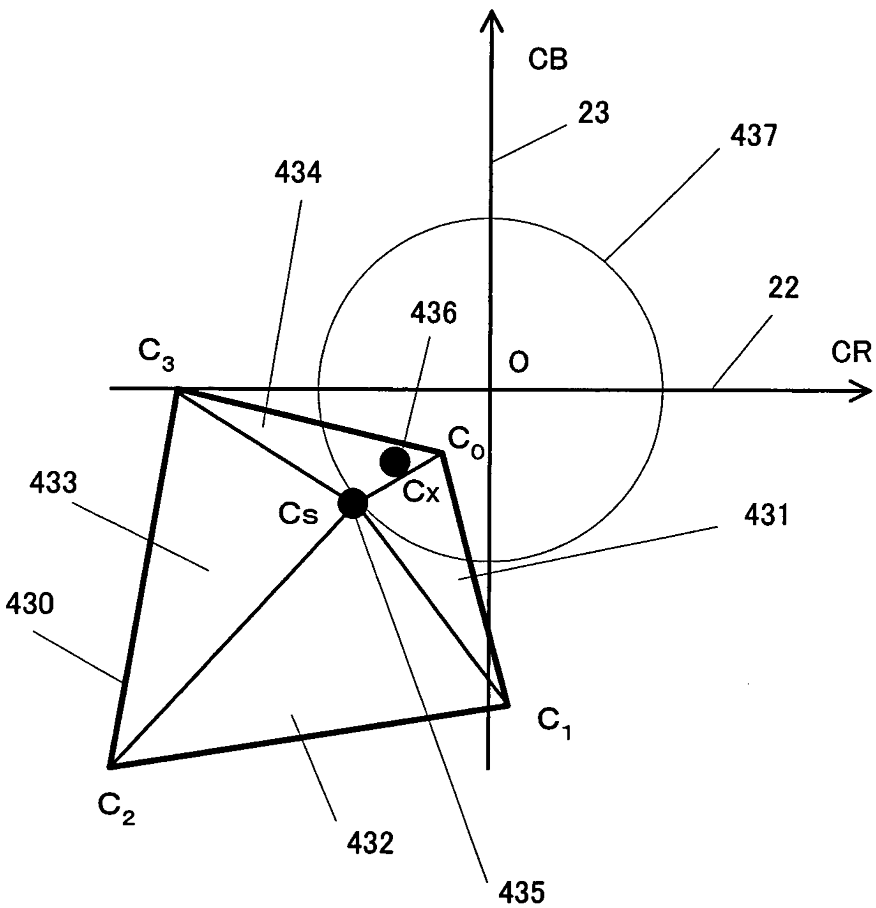

FIG. 34

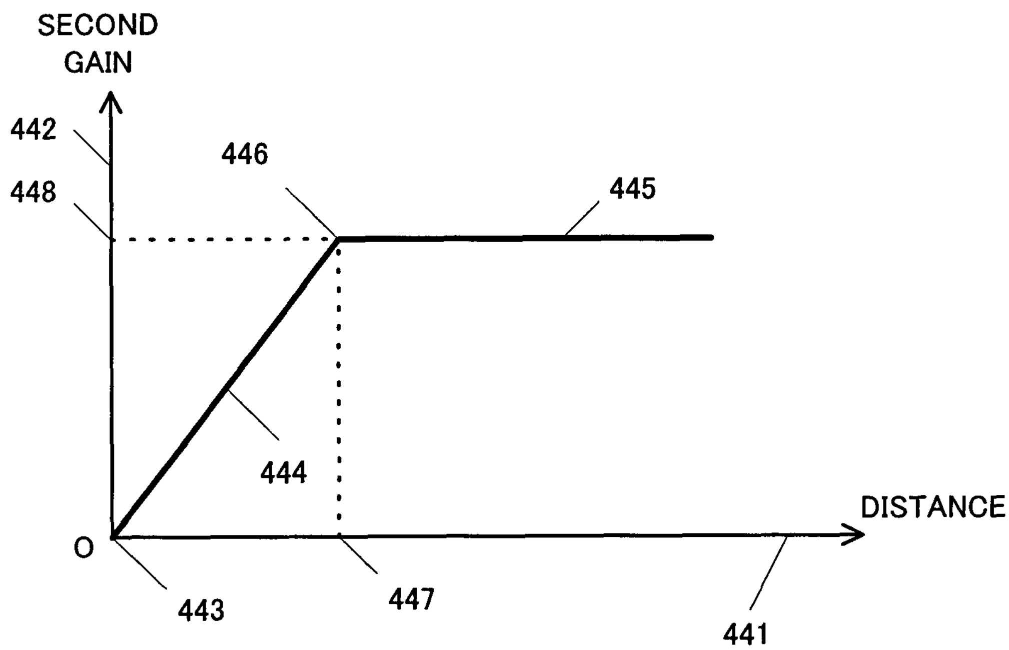

FIG. 35

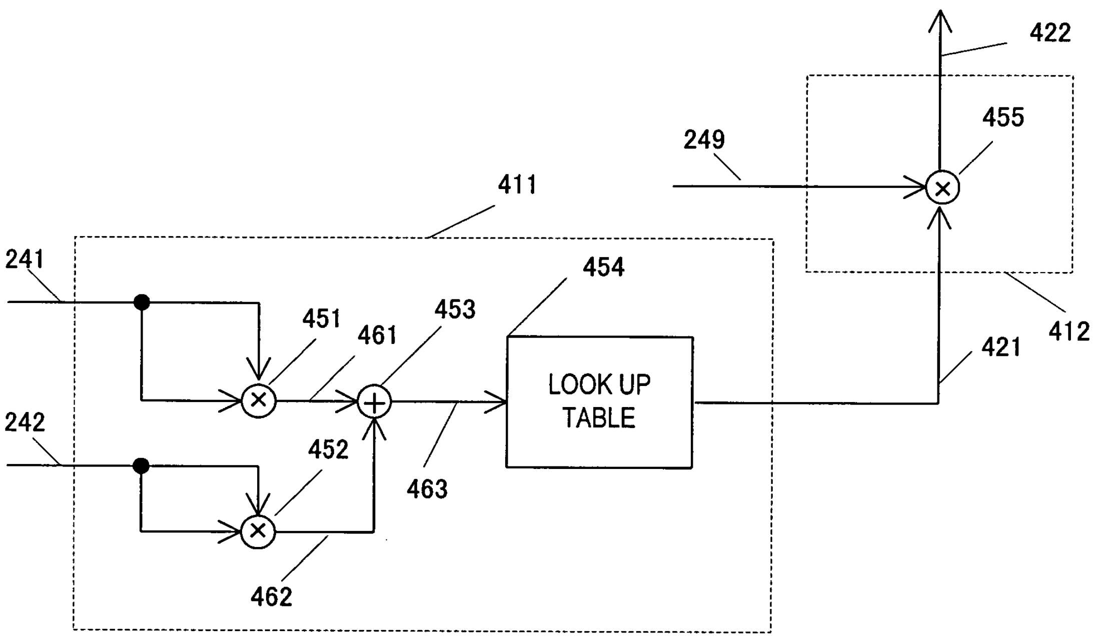
422
455
249
411
241
454
451
453
461
412
421
LOOK UP
TABLE
242
452
463
462

FIG. 36

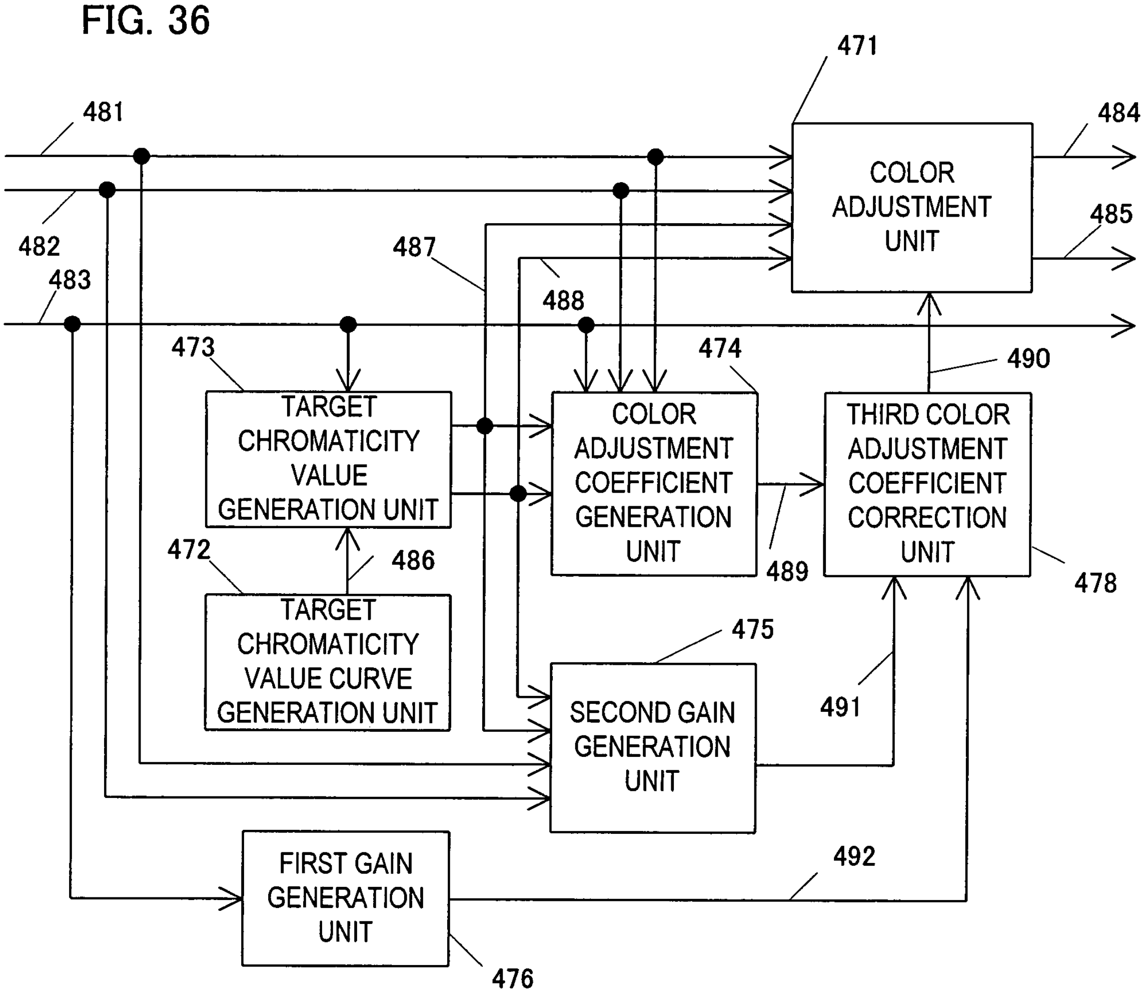
471
481
484
COLOR ADJUSTMENT UNIT
485
482
487
483
488
473
474
490
TARGET CHROMATICITY VALUE GENERATION UNIT
COLOR ADJUSTMENT COEFFICIENT GENERATION UNIT
THIRD COLOR ADJUSTMENT COEFFICIENT CORRECTION UNIT
472
486
489
478
TARGET CHROMATICITY VALUE CURVE GENERATION UNIT
475
491
SECOND GAIN GENERATION UNIT
492
FIRST GAIN GENERATION UNIT
476

FIG. 37

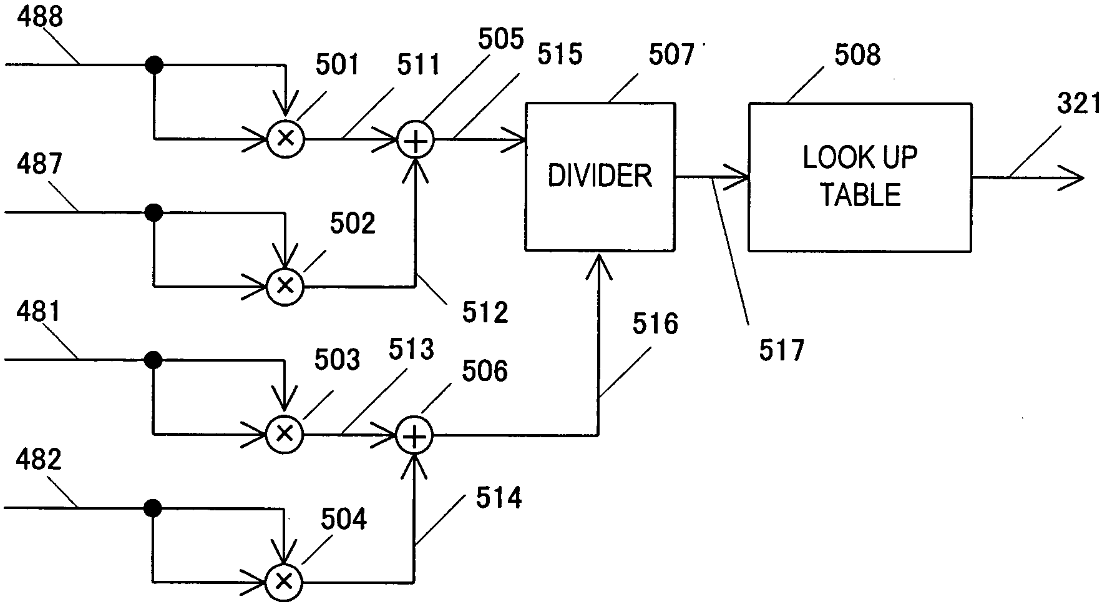
488
487
481
482
501
502
503
504
511
512
513
514
505
506
515
516
507
508
DIVIDER
LOOK UP
TABLE
517
321

FIG. 38

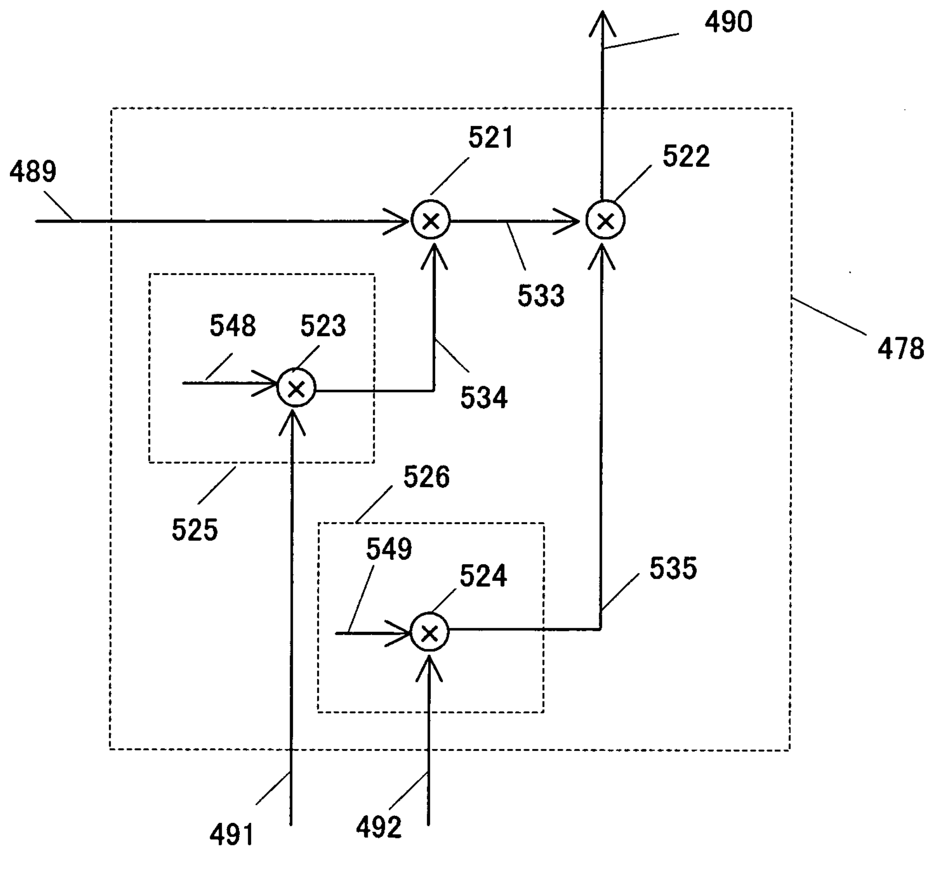

FIG. 39

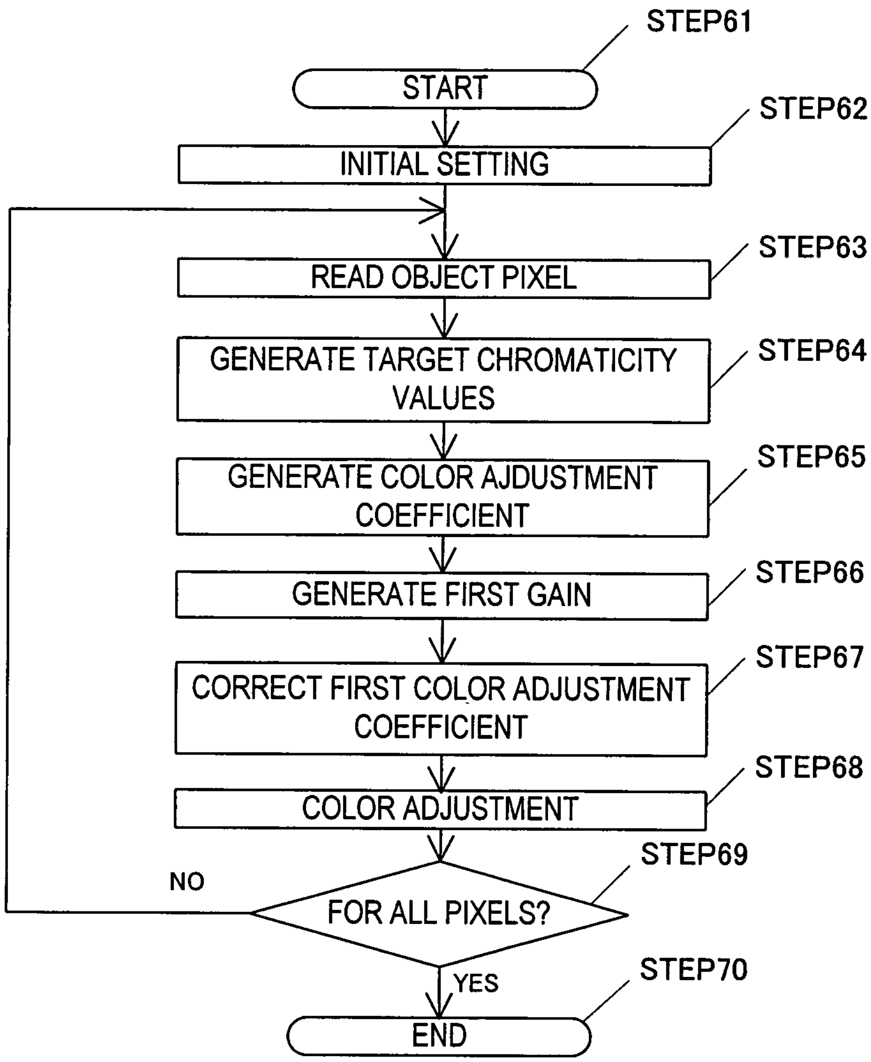
STEP61
START
STEP62
INITIAL SETTING
STEP63
READ OBJECT PIXEL
STEP64
GENERATE TARGET CHROMATICITY VALUES
STEP65
GENERATE COLOR AJDUSTMENT COEFFICIENT
STEP66
GENERATE FIRST GAIN
STEP67
CORRECT FIRST COLOR ADJUSTMENT COEFFICIENT
STEP68
COLOR ADJUSTMENT
STEP69
NO
FOR ALL PIXELS?
YES
STEP70
END

FIG. 40

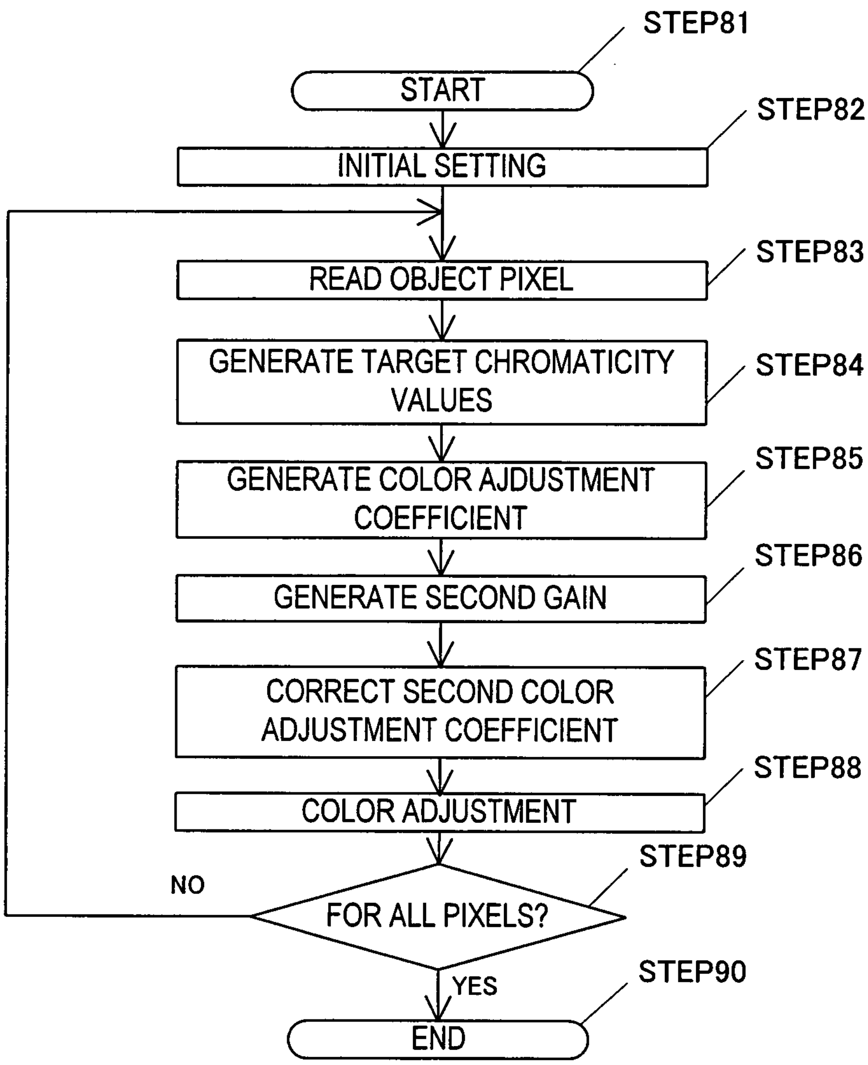
STEP81
START
STEP82
INITIAL SETTING
STEP83
READ OBJECT PIXEL
GENERATE TARGET CHROMATICITY VALUES
STEP84
STEP85
GENERATE COLOR AJDUSTMENT COEFFICIENT
STEP86
GENERATE SECOND GAIN
STEP87
CORRECT SECOND COLOR ADJUSTMENT COEFFICIENT
STEP88
COLOR ADJUSTMENT
STEP89
NO
FOR ALL PIXELS?
STEP90
YES
END

FIG. 41

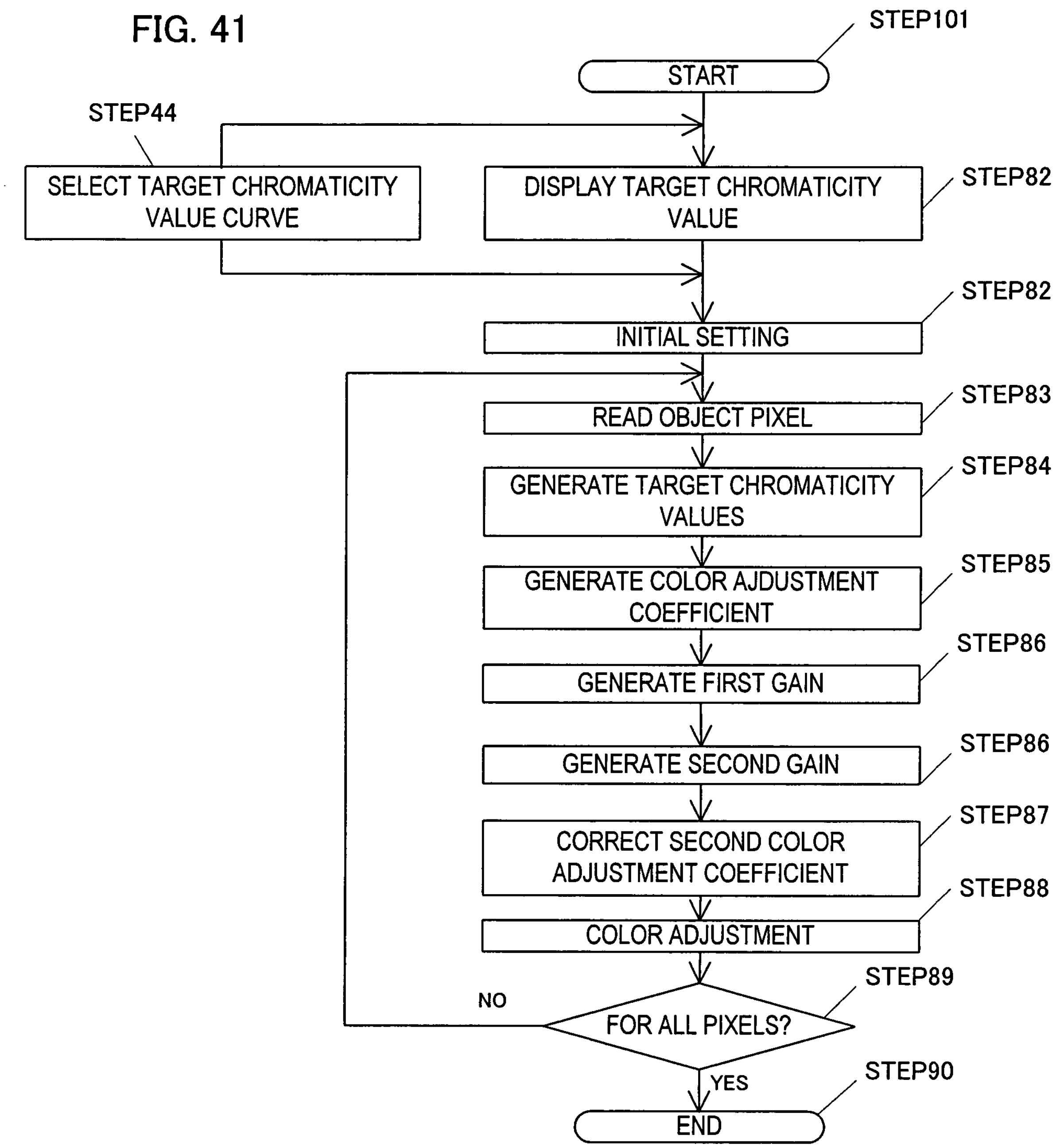
STEP101
START
STEP44
SELECT TARGET CHROMATICITY VALUE CURVE
DISPLAY TARGET CHROMATICITY VALUE
STEP82
STEP82
INITIAL SETTING
STEP83
READ OBJECT PIXEL
STEP84
GENERATE TARGET CHROMATICITY VALUES
STEP85
GENERATE COLOR AJDUSTMENT COEFFICIENT
STEP86
GENERATE FIRST GAIN
STEP86
GENERATE SECOND GAIN
STEP87
CORRECT SECOND COLOR ADJUSTMENT COEFFICIENT
STEP88
COLOR ADJUSTMENT
STEP89
NO
FOR ALL PIXELS?
YES
STEP90
END

FIG. 42

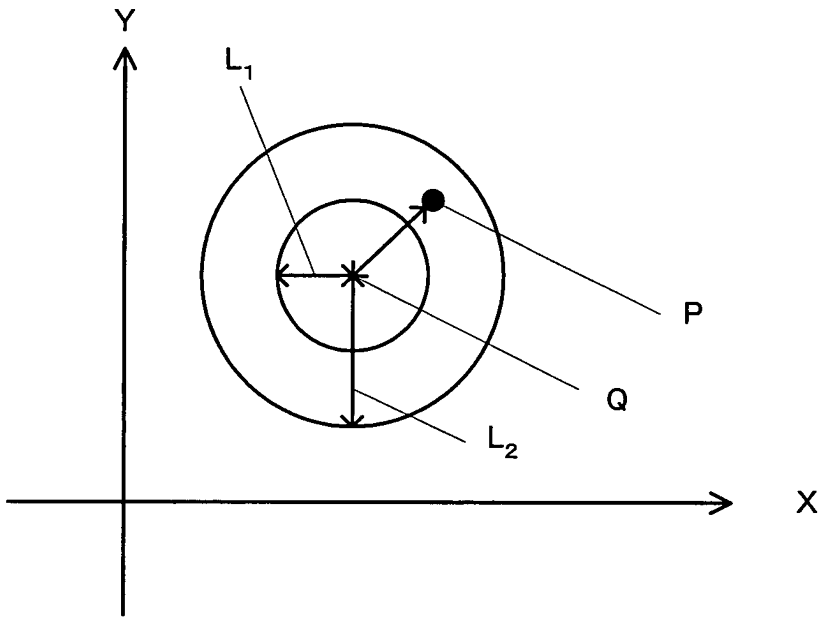

FIG. 43